# FASCICULE DE BREVET EUROPEEN

(11) **EP 0 760 914 B1**
(45) Date de publication et mention de la délivrance du brevet: **18.11.1998**
(21) Numéro de dépôt: 95921864.5
(22) Date de dépôt: 31.05.1995
(51) Int. Cl.: F16H 29/04

(54) **VARIATEUR DE VITESSE A MOUVEMENTS ALTERNATIFS INTERMEDIAIRES**
STUFENLOSES GETRIEBE MIT HIN- UND HERGEHENDEN ZWISCHENBEWEGUNGEN
VARIABLE SPEED DRIVE HAVING INTERMEDIATE ALTERNATING MOVEMENTS

(30) Priorité: 01.06.1994 FR 9406787
(43) Date de publication de la demande: 12.03.1997
(73) Titulaire: Badersbach,Jean, 12260 Balaguier-d'Olt (FR)
(72) Inventeur: Badersbach,Jean, 12260 Balaguier-d'Olt (FR)
(74) Mandataire: Morelle, Guy Georges Alain
(86) Numéro de dépôt international: FR9500705
(87) Numéro de publication internationale: WO9533149

(56) Documents cités:
- BE-A- 358 689
- BE-A- 572 406
- DE-C- 603 646
- DE-C- 822 642
- DE-C- 938 289
- FR-A- 383 070
- FR-A- 538 532
- FR-A- 590 368
- FR-A- 789 158
- GB-A- 321 574
- US-A- 1 858 934
- US-A- 2 864 259
- US-A- 2 959 062
- US-A- 4 711 139

## Description

L'invention concerne un variateur de vitesse destiné à être relié entre un arbre moteur rotatif et un arbre récepteur rotatif et permettant de faire varier continûment le rapport de transmission entre ces deux arbres.

On a déjà décrit différents modes de réalisation de variateurs de vitesse comprenant des mouvements alternatifs intermédiaires d'amplitude variable déterminant le rapport de transmission.

FR-A-1.133.080 décrit ainsi un variateur comprenant des systèmes bielle/manivelle à barre de torsion et roue libre. FR-A-2.125.083 décrit un variateur de vitesse comprenant une série d'ensembles périphériques qui oscillent sous l'action d'une came et sont couplés par des roues libres à un arbre récepteur. Le rapport de transmission dépend de l'amplitude du mouvement cyclique des ensembles périphériques qui elle-même dépend de l'excentricité de la came. Egalement, FR-A-2.200.933 décrit un variateur à engrenages droits à rapport variable fonctionnant comme un générateur d'ondes carrées, la variation des amplitudes des ondes carrées entraînant celle du rapport de transmission.

Par ailleurs, on connaît déjà des variateurs comprenant un roulement incliné permettant de générer des mouvements alternatifs intermédiaires transmis sur un arbre récepteur par un mécanisme à roues libres (voir par exemple FR-A- 538.532).

Néanmoins, et malgré l'ancienneté de ces documents, les différents dispositifs qu'ils décrivent n'ont pas pu être utilisés en pratique compte tenu de leurs faibles performances. En effet, outre les pertes importantes engendrées par les nombreuses pièces en mouvement, leur conception théorique a pour conséquence que les mouvements alternatifs engendrés ne sont pas sous forme de signaux carrés se succédant continûment. Dès lors, il est nécessaire d'associer un coupleur hydraulique et/ou un volant d'inertie au variateur, ce qui engendre un surdimensionnement de l'ensemble. De plus, les mouvements du variateur engendrent de fortes vibrations. En outre, avec ces variateurs connus, la transmission d'un frein moteur n'est pas possible.

Par ailleurs, les mouvements effectués à haute fréquence engendrent des problèmes de vibrations et de fatigue qui ne sont pas pris en compte dans les variateurs connus. Egalement, les jeux mécaniques des pièces en mouvement s'additionnant, réduisent encore les performances, la précision de fonctionnement et la tenue dans le temps de ces variateurs, notamment pour le variateur décrit dans FR-A-2.200.330.

Egalement, la commande en fonctionnement et en charge de la variation d'amplitude induisant la variation du rapport de transmission, et, plus généralement, la commande des divers modes de fonctionnement des variateurs connus, posent des problèmes qui ne sont pas intégralement résolus. En effet, ces commandes doivent être effectuées grâce à des asservissements hydrauliques onéreux, complexes, encombrants et qui consomment une grande quantité d'énergie.

L'invention vise à pallier ces inconvénients en proposant un variateur à rapport de vitesse continûment variable comprenant des mouvements alternatifs intermédiaires d'amplitude variable dont les performances pratiques sont améliorées.

En particulier, l'invention vise à proposer un tel variateur qui ne nécessite pas l'emploi d'un coupleur hydraulique et/ou d'un volant d'inertie, et dont le rendement théorique de transmission est amélioré, et notamment est égal ou très proche de 1.

Egalement, l'invention vise à proposer un tel variateur qui peut être pratiquement et industriellement réalisé, c'est-à-dire dans lequel les problèmes technologiques, notamment de mise au point, longévité, vibrations, équilibrages, jeux de fonctionnement, ... sont réduits au minimum et peuvent être aisément maîtrisés.

L'invention vise aussi à proposer un tel variateur dont la commande des variations du rapport de transmission est simple et notamment peut être réalisée sans asservissement, ou avec un simple asservissement électrique.

L'invention vise aussi à proposer un tel variateur qui peut être commuté, en fonctionnement, selon plusieurs modes de fonctionnement, notamment un mode moteur avec frein moteur, un mode rétrograde et un mode point mort.

L'invention vise aussi à proposer un tel variateur avec lequel le rapport de transmission peut être modifié à pleine. puissance continûment entre une valeur minimum R1 et une valeur maximum R2 au moins sept fois supérieure à R1.

L'invention vise aussi à proposer un tel variateur dont le temps de réponse après une commande de variation du rapport de transmission est très faible, notamment inférieur à ou de l'ordre de 1s.

Et l'invention vise à proposer un tel variateur pouvant être accouplé à un moteur thermique, et qui permet de commander des variations de vitesse d'un arbre de charge en laissant constants les paramètres thermodynamiques de fonctionnement du moteur, et donc le couple délivré par le moteur. En particulier, la commande des gaz d'admission du moteur doit pouvoir rester sensiblement constante, au niveau optimum de la consommation spécifique du moteur, les variations de puissance étant obtenues essentiellement par la variation du rapport de transmission du variateur.

Pour ce faire, l'invention concerne un variateur de vitesse destiné à être relié à un arbre moteur rotatif et à un arbre récepteur rotatif, comme connu de DE-C-938 289,
. comprenant au moins deux roulements inclinés, chaque roulement incliné comportant une cage extérieure et une cage intérieure définissant un axe commun qui est l'axe dudit roulement incliné,
   - comprenant des moyens de contrôle de l'orientation de l'axe de chaque roulement incliné selon un angle d'inclinaison dont la valeur réglable par rapport à un axe fixe du variateur détermine le rapport de transmission du variateur,
   - l'une des cages du roulement incliné étant une cage d'entrée recevant un mouvement rotatif moteur et étant entraînée en rotation autour de l'axe fixe à partir de la rotation de l'arbre moteur,
   - l'autre cage du roulement incliné étant une cage de sortie entraînée avec l'ensemble du roulement incliné selon des mouvements alternatifs, (en translation ou en rotation) d'oscillations d'amplitude proportionnelle à l'angle d'inclinaison de l'axe du roulement incliné par rapport à l'axe fixe correspondant, cette cage de sortie coopérant avec au moins un poussoir pour en commander des mouvements alternatifs (en translation ou en rotation),
   - comprenant des moyens de transmission aptes à transformer et à transmettre les mouvements alternatifs de chaque poussoir en un mouvement de rotation unidirectionnelle de l'arbre récepteur , caractérisé en ce que lesdits moyens de contrôle de l'orientation de l'axe de chaque roulement incliné sont adaptés pour que ces axes présentent tous normalement (c'est-à-dire en dehors des phases de variation du rapport de transmission) le même angle d'inclinaison par rapport à l'axe fixe correspondant mais soient déphasés les uns des autres relativement au mouvement rotatif moteur selon un angle de déphasage constant et invariable, de façon à transmettre à l'arbre récepteur des mouvements déphasés les uns des autres,
. en ce que lesdits moyens de transmission sont adaptés pour que, dans chaque phase du mouvement, l'un au moins des roulements inclinés soit en prise et transmette un effort, et l'un au moins des roulements inclinés ne soit pas en prise et ne transmette pas d'effort à l'arbre récepteur,
   - en ce que lesdits moyens de contrôle de l'orientation de l'axe de chaque roulement incliné sont adaptés pour modifier l'inclinaison de tous les roulements inclinés à partir d'un signal de commande de variation du rapport de transmission du variateur.
   - et en ce que lesdits moyens de contrôle de l'orientation de l'axe de chaque roulement incliné sont adaptés pour effectuer le réglage de l'inclinaison des roulements inclinés progressivement, l'inclinaison de chaque roulement incliné étant modifiée dans une phase du mouvement où ce roulement incliné n'est pas en prise et ne transmet pas d'effort à l'arbre récepteur.

Avantageusement et selon l'invention, lesdits moyens de contrôle de l'orientation de l'axe des roulements inclinés comportent :
. des moyens mobiles de commande adaptés pour se déplacer selon une amplitude de commande correspondant, notamment proportionnelle, à une modification souhaitée d'inclinaison,
. pour chaque roulement incliné ou groupe de roulements inclinés qui sont en prise simultanément, un organe de commande d'un mécanisme de contrôle d'inclinaison du (des) roulements(s) incliné(s),
. et des moyens mécaniques de mémorisation interposés entre les moyens mobiles de commande et chaque organe de commande, ces moyens mécaniques de mémorisation étant adaptés pour emmagasiner une amplitude de commande correspondant à une modification d'inclinaison et ne transmettre une rotation de commande à un organe de commande que lorsque la résistance opposée par cet organe de commande est inférieure a une valeur seuil prédéterminée. Avantageusement et selon l'invention, ces moyens mécaniques de mémorisation comportent, pour chaque organe de commande, un ressort de torsion interposé entre deux arbres rotatifs desdits moyens de contrôle de l'orientation de l'axe des roulements inclinés.

Dans une première variante de l'invention, le variateur comporte deux paires de roulements inclinés, chaque paire étant portée par un arbre fixe distinct de l'autre paire, les deux roulements inclinés d'une même paire étant déphasés de 180°, chaque roulement incliné porté par un arbre fixe étant déphasé de 90° par rapport à chaque roulement incliné porté par l'autre arbre fixe.

Selon l'invention, le variateur comporte au moins deux ensembles de transmission partielle aptes à transmettre des mouvements en opposition de phase à l'arbre récepteur, et notamment quatre ensembles de transmission partielle aptes à transmettre à l'arbre récepteur des mouvements déphasés de 90° les uns des autres.

Chaque ensemble de transmission partielle de mouvement comprend :
- un premier dispositif de transmission apte à générer, à partir de la rotation de l'arbre moteur, un mouvement alternatif d'au moins un poussoir selon une amplitude déterminée mais continûment réglable,
- un deuxième dispositif de transmission apte à transformer le mouvement alternatif du poussoir en un mouvement alternatif rotatif d'un arbre oscillant,
- un troisième dispositif de transmission unidirectionnelle du mouvement rotatif de l'arbre oscillant à un organe rotatif de sortie qui est accouplé en rotation à l'arbre oscillant uniquement dans l'un ou l'autre des sens de rotation, l'organe rotatif de sortie étant accouplé en rotation à l'arbre récepteur.

Dans une deuxième variante, et selon l'invention, le variateur comporte deux roulements inclinés déphasés de 90° l'un par rapport à l'autre, et lesdits moyens de transmission sont adaptés pour transmettre à l'arbre récepteur les mouvements de chaque cage de sortie alternativement pendant chaque quart de tour de l'arbre moteur.

Dans un mode de réalisation et selon l'invention, le variateur est caractérisé en ce qu'il comporte au moins un poussoir rotatif et oscillant comprenant au moins une portée au contact d'une portée solidaire de la cage de sortie d'un roulement incliné. Selon l'invention, la cage de sortie est la cage externe du roulement incliné.

Un variateur selon l'invention peut être réalisé de façon que les roulements inclinés et les ensembles de transmission partielle génèrent des mouvements alternatifs dont la course de vitesse a une forme quasiment carrée, les alternances se succédant continûment sur chaque tour de rotation et animant l'arbre récepteur d'une vitesse uniforme constante si l'arbre d'entrée tourne à vitesse constante.

Un variateur selon l'invention est aussi caractérisé en ce que, ladite cage de sortie et chaque poussoir correspondant définissent des surfaces de contact de formes complémentaires définies pour générer lesdits mouvements alternatifs de forme quasiment carrée se succédant continûment.

Selon l'invention, les formes complémentaires sont définies pour que, si l'arbre moteur tourne à vitesse constante, la vitesse (en rotation ou en translation) du poussoir soit au moins sensiblement constante pendant une durée correspondant à au moins un quart de tour de l'arbre moteur rotatif.

Selon l'invention, chaque poussoir est relié à un organe rotatif de sortie par l'intermédiaire d'au moins un dispositif de liaison unidirectionnelle.

Selon l'invention, le variateur comporte au moins un dispositif de liaison unidirectionnelle pouvant être commandé entre une position active de blocage unidirectionnel et une position inactive laissant le poussoir ou un arbre intermédiaire oscillant, et l'organe rotatif de sortie correspondant libres en rotation l'un par rapport à l'autre. Ce troisième dispositif de transmission unidirectionnelle comprend avantageusement deux dispositifs de liaison unidirectionnelle montés en sens contraires, un dispositif de liaison unidirectionnelle moteur réalisant un blocage unidirectionnel en sens moteur, et un autre dispositif de liaison unidirectionnelle rétrograde réalisant un blocage unidirectionnel en sens rétrograde. Et le variateur selon l'invention comporte des moyens de commande de chaque dispositif de liaison unidirectionnelle selon au moins trois modes de fonctionnement :
- un mode moteur avec frein moteur dans lequel le dispositif de liaison unidirectionnelle moteur est constamment maintenu en position active et le dispositif de liaison unidirectionnelle rétrograde est maintenu en position active uniquement lorsque le poussoir correspondant et l'organe rotatif de sortie correspondant se déplacent dans le sens moteur :
- un mode rétrograde dans lequel le dispositif de liaison unidirectionnelle moteur est constamment maintenu en position inactive et le dispositif de liaison unidirectionnelle rétrograde est constamment maintenu en position active,
- un mode point mort dans lequel les deux dispositifs de liaison unidirectionnelle sont maintenus en position inactive.

Avantageusement et selon l'invention, chaque dispositif de liaison unidirectionnelle est constitué d'un ressort hélicoïdal dont une extrémité est ancrée dans ledit organe rotatif de sortie et dont l'autre extrémité coopère avec une portée de friction mobile, et le variateur comporte des moyens de contrôle en fonctionnement de chaque portée de friction mobile adaptés pour que, lorsque la portée de friction est appliquée contre l'extrémité du ressort, celui-ci réalise un blocage unidirectionnel, et pour que, lorsque cette portée de friction n'est pas appliquée contre l'extrémité du ressort, l'organe rotatif soit libre en rotation, chaque ressort pouvant être commandé en fonctionnement en position active ou en position inactive.

Avantageusement et selon l'invention, le variateur comporte un ressort de liaison unidirectionnelle en sens rétrograde, et des moyens adaptés pour engendrer, dans le mode moteur avec frein moteur, des mouvements alternatifs en translation axiale de la portée de friction du ressort de liaison unidirectionnelle en sens rétrograde qui est commuté de façon cyclique en fonctionnement à haute fréquence en position active dans le sens moteur du poussoir correspondant et en position inactive dans le sens rétrograde du poussoir correspondant.

L'invention concerne aussi un variateur comportant en combinaison tout ou partie des caractéristiques mentionnées ci-dessus ou ci-après.

D'autres caractéristiques et avantages de l'invention apparaîtront de la description suivante qui se réfère aux figures annexées et dans lesquelles :
- la figure 1 est un schéma en section axiale illustrant la cinématique d'ensemble d'un variateur selon un premier mode de réalisation de l'invention,
- la figure 2 est une vue de détail en section axiale d'une extrémité du côté de l'arbre moteur, d'un arbre fixe d'un variateur selon le premier mode de réalisation de l'invention,
- la figure 3 est une vue de détail en section axiale en prolongement axial de la figure 2 de l'autre extrémité, du côté de l'arbre récepteur, de l'arbre fixe d'un variateur selon le premier mode de réalisation de l'invention,
- la figure 4 est une vue de détail en section axiale d'un mécanisme de réglage de jeu du variateur des figures 2 et 3,
- les figures 5a, 5b, 5c et 5d sont des schémas en section axiale illustrant diverses positions prises par un roulement incliné de transmission d'un variateur selon le premier mode de réalisation de l'invention au cours de la rotation de l'arbre moteur, l'inclinaison du roulement par rapport à l'arbre fixe restant inchangée,
- les figures 6a,6b, 6C et 6d sont des schémas en section selon la ligne VI-VI des figures 5a, 5b, 5c et 5d,
- les figures 7 et 8 sont des vues similaires aux figures 5a et 6a du roulement représenté avec une inclinaison nulle par rapport à l'arbre fixe,
- la figure 9 est un graphe représentant les courbes de vitesse des poussoirs d'un variateur selon l'invention au cours du temps, et illustrant une réduction d'inclinaison engendrant une réduction du rapport de transmission,
- la figure 10 est une vue de détail de la figure 9,
- la figure 11 est une vue similaire à la figure 9 illustrant une augmentation d'inclinaison engendrant une augmentation du rapport de transmission,
- la figure 12 est une vue de détail de la figure 11,
- la figure 13 est un schéma en section axiale illustrant la cinématique générale d'un mécanisme de commande de la variation du rapport de transmission d'un variateur selon l'invention,
- la figure 14 est un schéma en perspective d'un mécanisme de commande de fonctionnement des dispositifs de liaison unidirectionnelle d'un variateur selon le premier mode de réalisation de l'invention,
- la figure 15 est une vue schématique éclatée en perspective illustrant un mécanisme de commande d'un dispositif de liaison unidirectionnelle d'un variateur selon le premier mode de réalisation de l'invention,
- la figure 16 est une vue en section axiale schématique partielle de détail du mécanisme de la figure 15,
- la figure 17 est une vue en section similaire à la figure 16 illustrant une variante de réalisation du mécanisme,
- la figure 18 est un schéma partiel en section axiale illustrant la cinématique d'une variante de réalisation des troisièmes dispositifs de transmission unidirectionnelle d'un variateur selon l'invention.
- la figure 19 est une vue schématique en coupe par l'axe fixe des roulements inclinés d'un deuxième mode de réalisation d'un variateur selon l'invention à deux roulements inclinés,
- la figure 20 est une vue schématique en coupe selon la ligne XX-XX de la figure 19,
- la figure 21 est une vue schématique en coupe par l'axe fixe des roulements inclinés d'un troisième mode de réalisation d'un variateur selon l'invention à deux roulements inclinés plus particulièrement destiné à une transmission de cycle,
- la figure 22 est une vue schématique en coupe selon la ligne XXII-XXII de la figure 21.

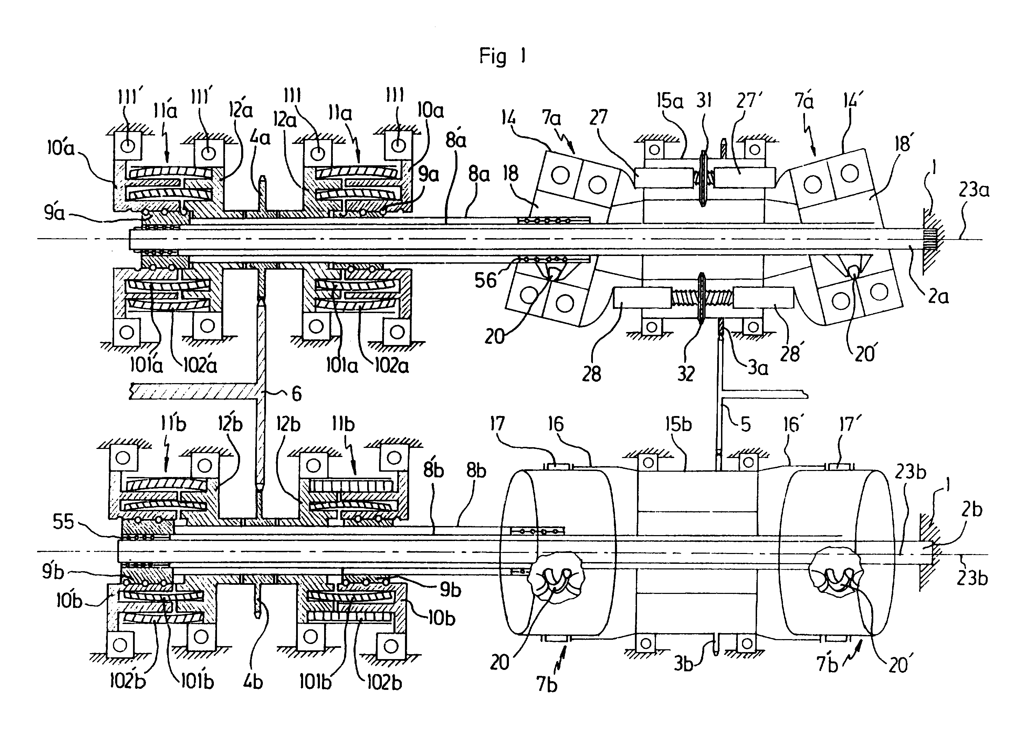

Le variateur de vitesse selon l'invention représenté figures 1 à 3 comporte un carter fermé 1 portant deux arbres fixes 2a, 2b d'axes 23a, 23b fixes distincts parallèles l'un à l'autre. Chaque arbre fixe 2a, 2b est associé à deux ensembles 7 à 12, 7' à 12' de transmission partielle centrés autour du même axe fixe 23a, 23b et transmettant des mouvements déphasés de 180° à un même pignon de sortie 4a, 4b monté rotatif autour de chaque axe fixe 23a, 23b. Les deux pignons de sortie 4a, 4b sont tous les deux reliés à travers le carter 1 à un pignon ou à une couronne solidaire d'un arbre récepteur 6 ou constituant cet arbre récepteur 6. Par exemple, les deux pignons de sortie 4a, 4b engrènent directement sur une couronne d'entrée d'un différentiel qui forme l'arbre récepteur 6 du variateur. Les ensembles 7a à 12a, 7'a à 12'a de transmission partielle portés par l'un 2a des arbres fixes, et, centrés autour du même axe fixe 23a, sont déphasés de 90° par rapport à chacun des ensembles de transmission partielle 7b à 12b, 7'b à 12'b centrés autour de l'autre axe fixe 23b et portés par l'autre arbre fixe 2b (c'est-à-dire transmettent à leur pignon de sortie 4a des mouvements déphasés de 90° par rapport aux mouvements transmis au pignon de sortie 4b de l'autre axe fixe 23b). Les mouvements opposés (déphasés à 180°) des deux pignons de sortie 4a, 4b peuvent être transmis dans le même sens (en phase) à un arbre récepteur 6 commun par l'intermédiaire d'un mécanisme de pignons inverseurs décrit ci-après. Chaque ensemble 7 à 12, 7' à 12' de transmission est aussi relié à un pignon d'entrée 3a, 3b monté rotatif autour de chaque arbre fixe 2a, 2b et qui est accouplé à un même arbre moteur 5 à travers le carter 1. L'arbre moteur 5 est par exemple entraîné par un moteur thermique.

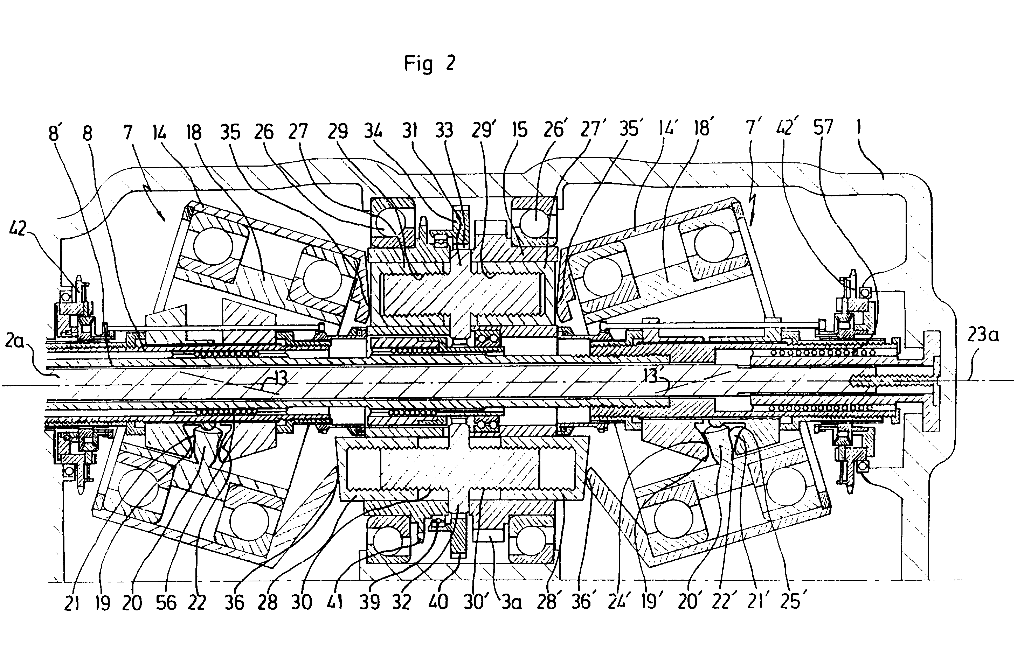

Sur les figures 2 à 4, seuls les ensembles 7 à 12 et 7' à 12' de transmission partielle portés par l'un 2a des arbres fixes sont représentés en détail. Les ensembles de transmission partielle portés par l'autre arbre fixe 2b sont identiques mais déphasés angulairement de 90° par rapport à ceux de l'arbre fixe 2a (figure 1). Par ailleurs, deux ensembles de transmission partielle portés par un même arbre fixe 2a ou 2b sont en opposition de phase.

On décrit donc ci-après en référence aux figures 2 à 4 les deux ensembles de transmission 7 à 12, 7' à 12' portés par l'un 2a des deux arbres fixes 2a, 2b.

Chaque ensemble 7 à 12, 7' à 12' de transmission partielle comprend un premier dispositif 7, 7' de transmission générant, à partir de la rotation de l'arbre moteur 5, un mouvement alternatif en translation axiale d'un poussoir 8, 8' selon une amplitude déterminée mais qui peut varier continûment ; un deuxième dispositif 9, 9' de transmission transformant le mouvement alternatif en translation du poussoir 8, 8' en un mouvement alternatif rotatif d'un arbre oscillant 10, 10' ; et un troisième dispositif 11, 11' de transmission unidirectionnelle du mouvement rotatif de l'arbre oscillant 10, 10' à un organe rotatif 12, 12' de sortie qui est entraîné en rotation par l'arbre oscillant 10, 10' uniquement dans l'un ou l'autre des sens de rotation, l'organe rotatif 12, 12' de sortie entraînant en rotation l'arbre récepteur 6, par l'intermédiaire du pignon de sortie 4a.

Les deux organes rotatifs 12 et 12' de sortie des ensembles 7 à 12 et 7' à 12' de transmission tournant autour d'un même axe fixe 23a sont accouplés au même pignon de sortie 4a porté par cet axe fixe 23a. Et les deux ensembles 7 à 12, 7' à 12' de transmission reçoivent le mouvement moteur par le même pignon d'entrée 3a tournant autour de cet axe fixe 23a, et auquel les premiers dispositifs 7, 7' de transmission sont accouplés.

Chaque premier dispositif 7, 7' de transmission comporte un roulement incliné monté sur l'arbre fixe 2a de façon que l'orientation de l'axe 13, 13' du roulement par rapport à l'axe fixe 23a correspondant puisse être modifiée. Chaque roulement incliné comprend par exemple deux séries de billes ou de rouleaux, une de chaque côté axial du roulement, et des cages extérieure 14, 14' et intérieure 18, 18' définissant des chemins de roulement. Ces chemins de roulement sont symétriques de révolution autour d'un axe 13, 13', qui est l'axe du roulement incliné, et emprisonnent les billes ou rouleaux, de sorte que les cages extérieure et intérieure sont libres en rotation l'une par rapport à l'autre mais solidaires axialement l'une par rapport à l'autre, à la façon d'un roulement à billes traditionnel.

La cage extérieure 14, 14' de chaque roulement incliné est une cage d'entrée 14, 14' entraînée en rotation autour de l'axe fixe 23a à partir du mouvement rotatif de l'arbre moteur 5. Pour ce faire, le pignon d'entrée 3a est formé à l'extérieur d'un cylindre 15 qui porte, de chaque côté dans la direction axiale, deux fourchettes 16 et 16' diamétralement opposées et qui sont associées à la cage 14, 14' extérieure par une articulation à axe 17, 17' radial (figure 1). Les deux fourchettes 16, 16' constituent ainsi une chape d'entraînement de chaque cage extérieure 14, 14' qui est articulée à cette chape et entraînée par le pignon d'entrée 3a correspondant. La cage intérieure 18, 18' de chaque roulement incliné 7, 7' est une cage de sortie 18, 18' qui coopère avec des portées radiales 19, 19', 22, 22' portées par le poussoir 8, 8' pour en commander des mouvements alternatifs de translation engendrés par la rotation de la cage extérieure 14, 14' inclinée, engendrant elle-même des basculements alternatifs (c'est-à-dire des oscillations et des louvoiements du plan radial du roulement et de la cage intérieure 18, 18'). Pour ce faire, la cage intérieure 18, 18' comporte au moins une portion de couronne 20, 20' s'étendant en saillie vers l'intérieur et vers l'axe fixe 23a dans une gorge 21, 21' définie par et entre une portée radiale 19, 19' et une portée radiale opposée 22, 22' toutes deux bloquées en rotation et fixées de façon réglable en translation par rapport au poussoir 8, 8'. La portion de couronne 20, 20' comporte une cannelure axiale 97 engagée par une clavette ou un ergot 96 solidaire du poussoir 8, 8' pour bloquer la cage intérieure 18, 18' en rotation. En variante non représentée, la portion de couronne 20, 20' peut être remplacée par une couronne complète et la cage intérieure 18 peut être libre en rotation autour de l'arbre fixe 2a.

Les faces latérales 24, 24' et 25, 25' de cette portion de.couronne 20, 20' viennent au contact des portées 19, 19' et 22, 22' de la gorge 21, 21' de façon d'une part à entraîner les poussoirs 8, 8' en translation et d'autre part à autoriser des modifications de l'inclinaison du roulement incliné par rapport à l'axe fixe 23a de l'arbre fixe 2a. Plus précisément, ces faces latérales 24, 24', 25, 25' forment des portées roulant sur les portées correspondantes 19, 19', 22, 22' de la gorge 21, 21'. Ainsi, la portion de couronne 20, 20' de la cage intérieure 18, 18' et la portée 19, 19' du poussoir 8, 8' définissent des surfaces 19, 19' et 24, 24' en contact de formes complémentaires qui sont définies pour rouler l'une sur l'autre. Lorsque la cage extérieure 14, 14' tourne autour de l'arbre fixe 2a, la cage intérieure 18, 18' oscille par rapport à l'axe fixe 23a de cet arbre fixe 2a, son inclinaison (c'est-à-dire la position du plan radial du roulement) par rapport à cet axe 23a variant angulairement selon un mouvement alternatif d'oscillation de chaque côté d'un plan radial à l'axe fixe 23a. Dès lors, le poussoir 8, 8' actionné par la portion de couronne 20, 20' est entraîné selon un mouvement axial alternatif de translation le long de l'axe fixe 23a.

L'amplitude de ces oscillations dépend de l'inclinaison donnée à la cage extérieure 14, 14' par rapport à l'axe 23a fixe de l'arbre fixe 2a.

Cette inclinaison, qui correspond à l'orientation de l'axe 13, 13' du roulement incliné est maintenue, mais peut être modifiée et réglée par des moyens de réglage qui déterminent l'orientation de cet axe 13, 13' par rapport à l'axe fixe 23a. Le cylindre 15 d'entrée qui porte le pignon d'entrée 3a est monté rotatif par rapport au carter 1 autour de l'arbre fixe 2a par deux roulements 26, 26'. Ce cylindre 15 comporte deux pistons 27, 27' s'étendant parallèlement à l'arbre fixe 2a en direction respectivement des cages extérieures 14, 14', et deux autres pistons 28, 28' de réglage diamétralement opposés aux deux premiers. Les deux pistons 27, 27' ou 28, 28' d'une paire de pistons sont taraudés en sens inverse et engagés respectivement dans des filetages 29, 29' ou 30, 30' correspondants de vis portées par des pignons 31, 32. Les deux pignons 31, 32 sont montés rotatifs par rapport au cylindre 15. La denture intérieure 33 d'une couronne 34 (figure 2) vient engrener avec les dents des pignons 31, 32 pour les entraîner en rotation. Ainsi, lorsque la couronne 34 tourne par rapport au cylindre 15, les pignons 31, 32 tournent autour de leur axe, et les pistons 27, 27' et 28, 28' coulissent en translation parallèlement à l'axe fixe 23a. Les deux pistons 27, 27' et 28, 28' d'une même paire de pistons coulissent en sens opposés. Les pistons de la première paire 27, 27' coulissent en sens opposé des pistons de la deuxième paire 28, 28'. L'extrémité libre 35, 35' respectivement 36, 36' de chaque piston 27, 27' et 28, 28' forme une butée qui vient en appui contre une portée latérale correspondante 37, 37', 38, 38' de la cage extérieure 14, 14'. De la sorte, l'inclinaison de cette cage extérieure 14, 14' par rapport à l'axe de l'arbre fixe 2a est modifiée. La couronne 34 est montée rotative par rapport au cylindre 15 grâce à un roulement 39. La couronne 34 comporte en outre une denture externe 40 qui permet de l'entraîner en rotation. Par ailleurs, chaque cylindre 15 porte un pignon à chaîne à denture externe 41 qui permet de repérer la position de la couronne 34 par rapport au cylindre 15 par l'intermédiaire d'un mécanisme de commande de l'inclinaison décrit ci-après.

Les deux poussoirs 8, 8' sont des cylindres concentriques autour de l'axe fixe 23a et de l'arbre fixe 2a et sont montés mobiles en translation et sont bloqués en rotation l'un par rapport à l'autre par un système à billes et cannelures axiales 56. Chaque arbre fixe 2a est porté et bloqué en rotation par rapport au carter 1 par une de ses extrémités libres. L'autre extrémité libre de l'arbre fixe 2a n'est pas associée au carter 1, mais est portée par le poussoir interne 8' de plus grande longueur. Un système de billes et cannelures axiales 55 bloque en rotation le poussoir 8' interne de plus grande longueur par rapport à l'arbre fixe 2a en autorisant les translations alternatives axiales du poussoir 8'.

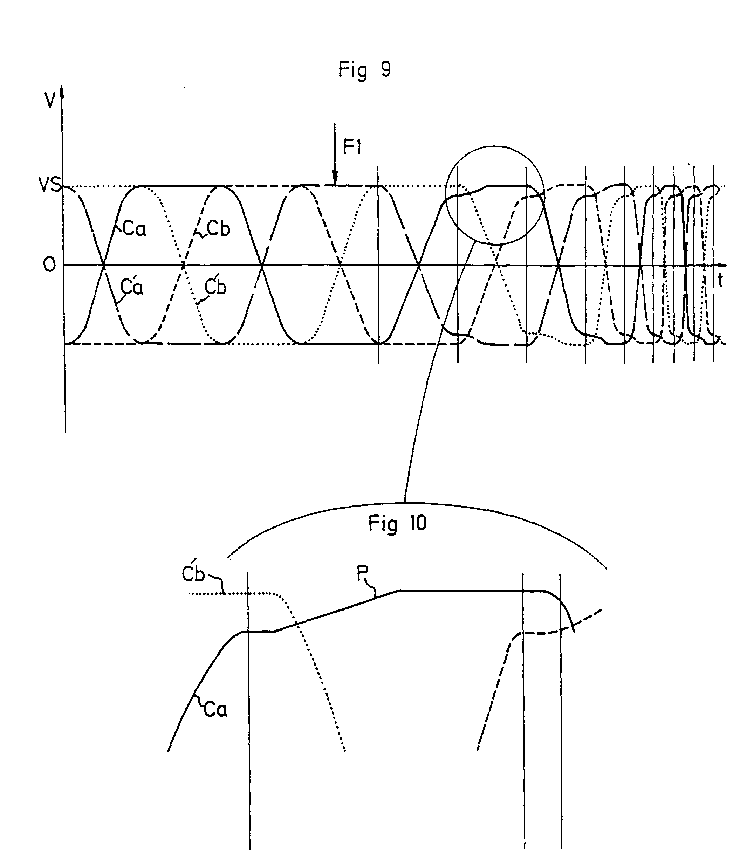

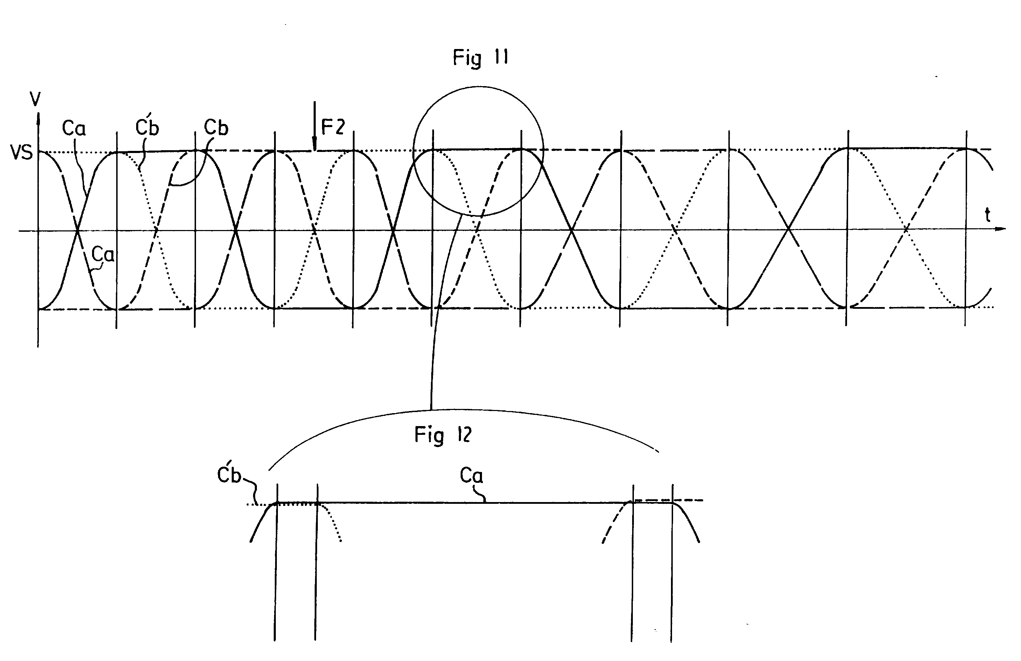

Les formes complémentaires des portées latérales 24, 24' et 25, 25' de la portion de couronne 20, 20' et des portées 19, 19' et 22, 22' solidaires du poussoir 8, 8' venant en contact sont définies de telle façon que si l'arbre moteur 5 tourne à vitesse constante, la vitesse de translation du poussoir 8, 8' engendrée soit au moins sensiblement constante pendant une durée correspondant à au moins un quart de tour de l'arbre moteur 5 rotatif. Ainsi, on s'assure que lors de chaque tour de rotation de l'arbre moteur 5, au moins un des poussoirs 8, 8', qui sont déphasés de 90° les uns par rapport aux autres dans leurs mouvements, soit actif et transmette le mouvement moteur pendant au moins un quart de tour (voir figures 9 et 11). ces formes respectives des portées 19, 19', 24, 24' et 22, 22', 25, 25' sont également définies pour rouler l'une sur l'autre avec un minimum de glissement. Avantageusement, au moins les portions en contact des portées pendant les phases de vitesse constante du poussoir ont des formes qui sont définies pour rouler sans glisser au moins pour une position d'inclinaison - notamment et de préférence, la position d'inclinaison moyenne- de la gamme de variation de cette inclinaison.

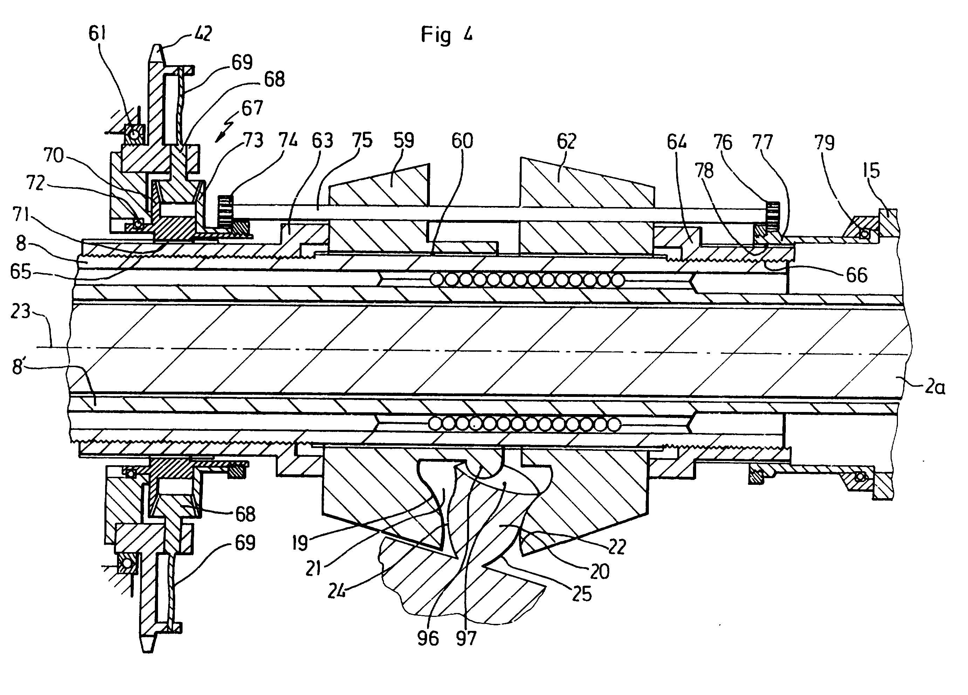

Les portées latérales 24, 24' et 25, 25' de la portion de couronne 20, 20' et les portées 19, 19' et 22, 22' solidaires du poussoir 8, 8' s'étendent autour de leur axe 13, 13' et 23a sur un secteur angulaire inférieur à 90°. Les deux roulements inclinés d'un même axe fixe 23a, 23b sont symétriques l'un de l'autre par rapport à un plan radial médian de symétrie du cylindre 15a, 15b d'entrée correspondant. Un exemple de forme des portées 19, 19', 22, 22', 24, 24', 25, 25' en contact du roulement incliné et du poussoir 8, 8' apparaît de la figure 4 et des figures 5a à 5d, 6a à 6d, 7 et 8 qui représentent schématiquement un roulement incliné en différentes positions.

La portion de couronne 20 est formée d'au moins une portion de volume de révolution autour de l'axe 13 du roulement. Sa portée latérale 25 orientée du côté du cylindre 15 a un profil qui vient rouler contre la portée 22 en regard de la butée 62 solidaire du poussoir 8.

La portée latérale 24 de la portion de couronne 20 orientée à l'opposé du cylindre 15 et vient rouler contre la portée 19 en regard de la butée 59 solidaire du poussoir 8.

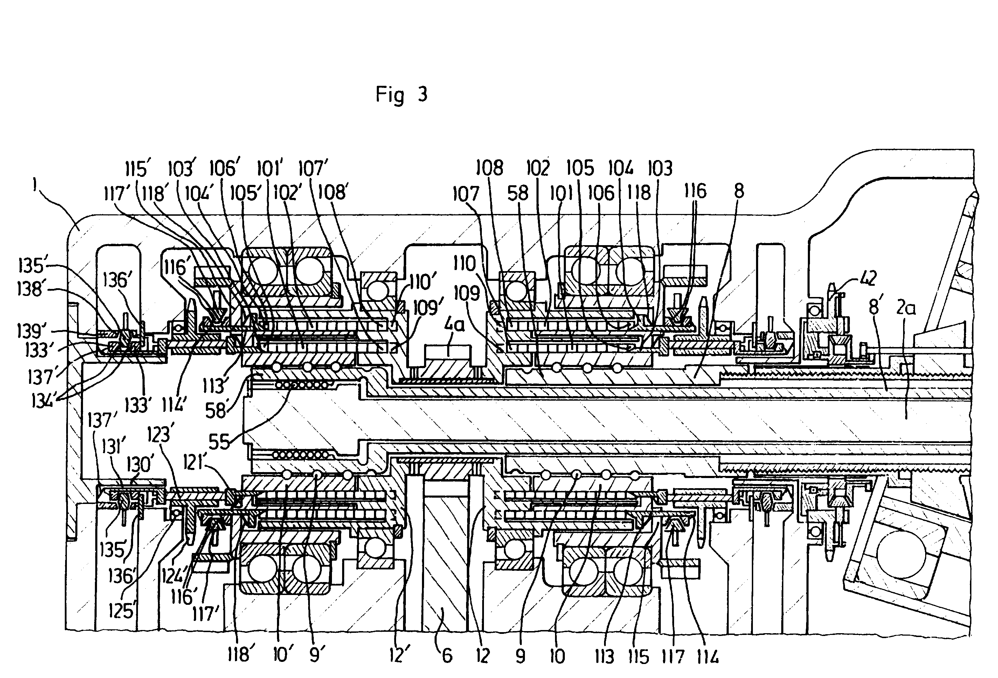

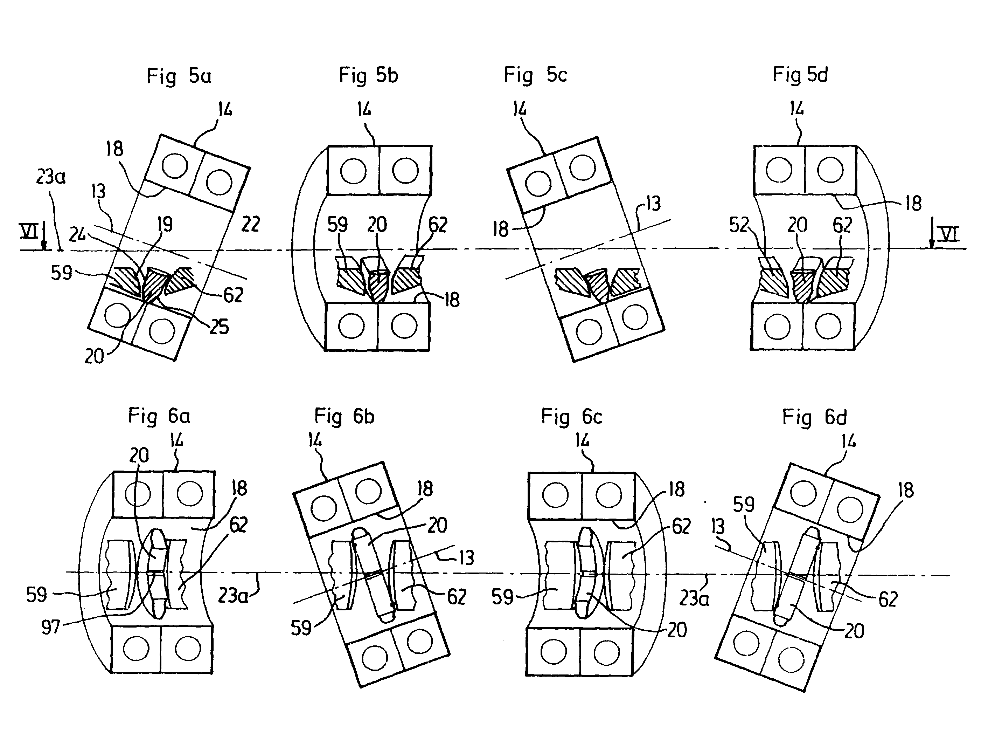

Les figures 5a et 6a représentent les positions relatives de la portion de couronne 20 et des portées 19, 22 des butées 59, 62 lorsque le poussoir est repoussé en sa position la plus éloignée du cylindre 15, comme représenté figures 2 et 3. Les figures 5b, 6b, représentent ces positions après une rotation de 90° du cylindre 15 et de la cage extérieure 14 du roulement. Les figures 5c, 6c et 5d, 6d représentent ces positions après une rotation de 180°, respectivement 270° par rapport aux figures 5a, 6a du cylindre 15 et de la cage extérieure 14 du roulement. Comme on le voit, la rotation du cylindre 15 engendre un mouvement alternatif en translation des butées 59, 62 et donc du poussoir 8, dont l'amplitude croît avec la valeur de l'angle d'inclinaison de l'axe 13 par rapport à l'axe 23a de l'arbre fixe 2a.

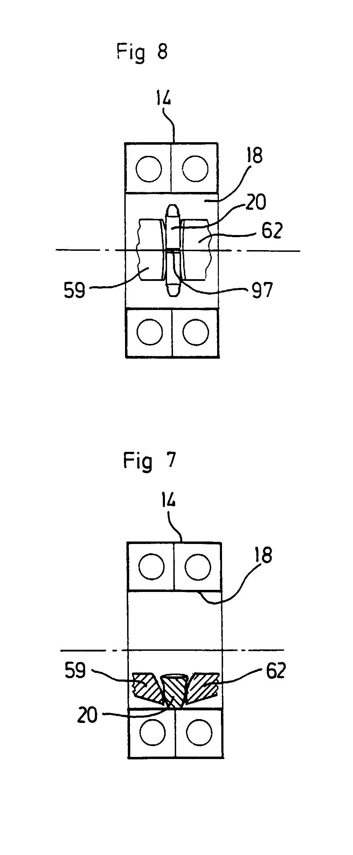

Lorsque cette inclinaison est nulle (figures 7 et 8), le poussoir 8 reste immobile.

Par ailleurs, le variateur comporte un mécanisme de réglage du jeu axial entre les portées 19, 19', 22, 22' de contact de part et d'autre de la portion de couronne 20, 20' (figure 4).

Comme on le voit sur la figure 4, les portées 19 et 22 sont formées sur des faces globalement radiales respectivement de deux butées 59, 62 qui sont montées axialement coulissantes par des cannelures 60 à l'extérieur du poussoir 8. Ces butées 59, 62 sont maintenues axialement et commandées en translation axiale en sens opposés respectivement par deux manchons 63, 64 qui viennent en appui sur ces butées 59, 62 à l'opposé des portées 19, 22. Les manchons 63, 64 sont taraudés et engagés autour d'un filetage 65, 66 de la surface extérieure du poussoir 8. Un pignon 42 à chaîne commandé en rotation par un mécanisme de commande, entraîne en rotation l'un et/ou l'autre des deux manchons 63, 64 dans le sens du rapprochement axial des butées 59, 62 lorsque l'inclinaison du roulement est diminuée, et de l'écartement dans le cas contraire.

Le pignon 42 est monté rotatif par rapport au carter 1 grâce à un palier ou roulement 61. Il entraîne les manchons 63, 64 en rotation autour du poussoir 8 par l'intermédiaire d'un mécanisme différentiel 67. Grâce aux filetages 65, 66, la rotation des manchons 63, 64 entraîne leur translation axiale le long du poussoir 8.

Le pignon 42 porte deux pignons 68 à denture conique à axe de rotation radial. Chaque pignon 68 est monté librement rotatif et est couplé à une extrémité d'un ressort de torsion 69 dont l'autre extrémité est ancrée dans le pignon 42.

Le pignon 68 engrène d'un côté avec un pignon 70 à denture conique couplé par des cannelures 71 au manchon 63. Le pignon 70 est monté rotatif par rapport au pignon 42 grâce à un palier ou à un roulement 72. Le pignon 68 engrène de l'autre côté avec un pignon 73 à denture conique monté rotatif autour d'un prolongement axial cylindrique du pignon 70. Ce pignon 73 comporte une denture extérieure droite qui engrène avec un pignon 74 solidaire en rotation d'une extrémité d'une tige de liaison 75 qui traverse axialement les butées 59, 62. L'extrémité opposée de cette tige de liaison 75 est couplée à un pignon 76 qui engrène avec une denture extérieure droite d'un pignon 77 pour l'entraîner en rotation autour du poussoir 8. Ce pignon 77 est couplé en rotation au manchon 64 par des cannelures axiales 78. Le pignon 77 est monté rotatif par rapport au cylindre 15 par l'intermédiaire d'un palier ou roulement 79.

Grâce à ce mécanisme différentiel 67, la rotation du pignon 42 ne peut entraîner en déplacement que la butée 59, 62 qui n'est pas en appui sur la portion de couronne 20. Dans la position représentée figure 4, c'est la butée 59 qui peut être déplacée. Par ailleurs, les ressorts de torsion 69 permettent de rappeler les butées 59, 62 en une position médiane de centrage axial de chaque côté de la portion de couronne 20.

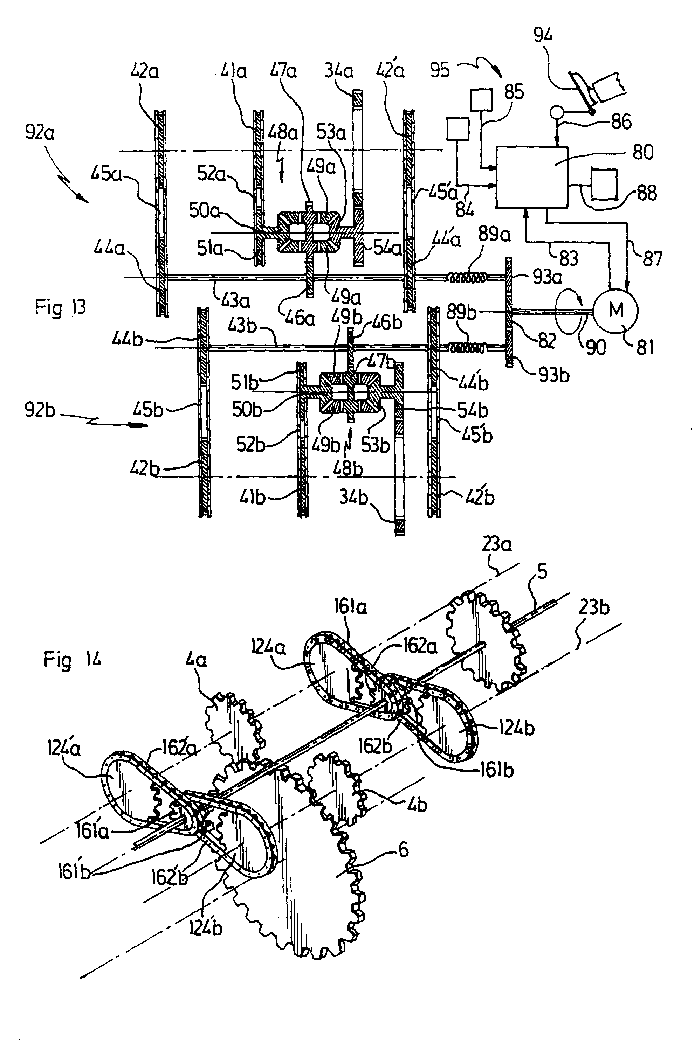

On peut ainsi modifier l'écartement des portées 22, 22' et 19, 19' en fonction de l'inclinaison du roulement et des jeux à rattraper. Ce réglage peut être effectué automatiquement lors de la modification de l'inclinaison grâce à des moyens de commande communs (figure 13).

En variante non représentée, le mécanisme de réglage de jeu axial entre les portées peut être constitué d'un dispositif de réglage de la position axiale de l'une 59 seulement des butées, l'autre butée 62 étant bloquée axialement et solidaire du poussoir 8. Dans ce cas le mécanisme est restreint au pignon 42 monté directement avec les cannelures 71 sur le manchon taraudé 63.

La figure 13 représente les moyens de commande du réglage de l'inclinaison des roulements et des jeux permettant de faire varier le rapport de transmission du variateur. Un arbre rotatif de commande 90 porte un pignon 82 commandant deux ensembles mécaniques de commande 92a, 92b similaires, un pour les ensembles de transmission de chaque axe fixe 23a, 23b. L'arbre de commande 90 est mobile et entraîné en rotation selon une amplitude de commande correspondant à un signal de commande de variation du rapport de transmission du variateur imposée par l'utilisateur. La position angulaire de l'arbre de commande 90 détermine la valeur de l'angle d'inclinaison de tous les roulements inclinés, et donc le rapport de transmission du variateur.

Chaque ensemble mécanique de commande 92a, 92b, comporte un arbre secondaire de commande 43a, 43b. Cet arbre secondaire de commande 43a, 43b est accouplé à l'extrémité d'un ressort de torsion 89a, 89b dont l'autre extrémité est accouplée à un pignon 93a, 93b engrènant sur le pignon 82. Le ressort de torsion 89a, 89b est apte à emmagasiner la course de rotation impartie par l'arbre de commande 90 et à la restituer à l'arbre secondaire de commande 43a, 43b progressivement, dans les phases de fonctionnement où l'ensemble mécanique 92a, 92b offre le moins de résistance. Ainsi, les ressorts de torsion 89a, 89b jouent le rôle de moyens mécaniques de mémorisation emmagasinant l'amplitude de commande de l'arbre de commande 90 correspondant à une modification d'inclinaison. Les ressorts 89a, 89b jouent aussi le rôle de détecteur de résistance en ne transmettant une rotation de commande que lorsque la résistance opposée par l'ensemble 92a, 92b correspondant est inférieure à une valeur seuil prédéterminée. On assure ainsi que les modifications d'inclinaison de chaque roulement incliné et les réglages de jeux n'interviennent pas pendant les phases de déplacement à vitesse constante du (des) poussoir(s) 8, 8' correspondant(s) où ce(s) poussoir(s) transmet(tent) de la puissance.

L'arbre secondaire de commande 43a, 43b entraîne en rotation des pignons 44a, 44'a, 44b, 44'b reliés par une chaîne 45a, 45'a, 45b, 45'b aux pignons 42a, 42'a, 42b, 42'b de réglage du jeu entre des butées 59, 62 des roulements inclinés (tel que précédemment décrit en référence à la figure 4). Chaque arbre de commande 43a, 43b porte également un pignon 46a, 46b qui engrène avec un pignon 47a, 47b solidaire d'un porte-satellite rotatif d'un train épicycloïdal 48a, 48b.

En tournant, le pignon 46a, 46b fait donc tourner les axes de pignons satellites 49a, 49b à denture conique du train épicycloïdal 48a, 48b. L'un 50a, 50b des pignons planétaires à denture conique du train épicycloïdal 48a, 48b est solidaire d'un pignon 51a, 51b et relié par une chaîne 52a, 52b au pignon 41a, 41b porté par le cylindre 15 d'entrée. L'autre pignon planétaire 53a, 53b à denture conique est solidaire en rotation d'un pignon de sortie 54a, 54b engrènant avec la denture externe 40a, 40b de la couronne 34a, 34b de commande à double denture, portée par le cylindre 15a, 15b. La denture interne de la couronne 34a, 34b de commande engrène avec les pignons 31, 32 pour maintenir (si elle reste immobile par rapport au cylindre 15) ou faire varier (si elle tourne par rapport au cylindre 15) l'inclinaison des roulements inclinés.

Ainsi, lorsque l'arbre de commande 43a, 43b ne tourne pas, les planétaires 50a, 50b, 53a, 53b tournent en sens inverses l'un de l'autre à la même vitesse absolue et sont entraînés par le pignon 41a, 41b et la couronne 34a, 34b. La rotation de l'arbre secondaire de commande 43a, 43b engendre une rotation de l'axe des satellites 49a, 49b et donc un décalage angulaire relatif de la couronne 34a, 34b par rapport au pignon 41a, 41b et au cylindre 15. Les pignons 31, 32 tournent et l'angle d'inclinaison est modifié. Cette même rotation de l'arbre de commande 43a, 43b engendre aussi une rotation des pignons 42a, 42'a, 42b, 42'b modifiant la largeur de la gorge 21, 21' dans laquelle la portion de couronne 20, 20' de la cage intérieure 14, 14' du roulement incliné correspondant est insérée.

Dans l'exemple représenté, le mécanisme de commande comporte un ensemble mécanique de commande 92a, 92b et un train épicycloïdal 48a, 48b pour chaque ligne d'arbre fixe 2a, 2b. En variante non représentée, il est possible de ne prévoir qu'un seul arbre secondaire de commande 43a, un seul ensemble de commande 92a, un seul train épicycloïdal 48a, dont le pignon de sortie 54a est relié coaxialement à un deuxième pignon de sortie 54b engrènant avec la couronne 34b de commande du cylindre 15b du deuxième arbre fixe 2b. Dans ce cas, le deuxième ressort 89b de torsion est interposé entre les deux pignons de sortie 54a, 54b.

Lorsque l'arbre de commande 90 reste fixe, l'inclinaison de l'axe 13, 13' est la même pour tous les roulements inclinés 7, 7', et reste constante. Le rapport de transmission reste donc inchangé. Les axes des roulements inclinés 7a, 7b, 7'a, 7'b décrivent une rotation autour de chaque axe fixe 23a, 23b, selon des mouvements déphasés les uns des autres de 90°, de façon à transmettre des mouvements déphasés à l'arbre récepteur 6.

L'entraînement en rotation de l'arbre rotatif de commande 90 est obtenu à partir de l'actionnement de l'utilisateur sur une pédale 94 de commande permettant de régler le rapport de transmission et donc la puissance transmise à l'arbre récepteur 6 par le variateur selon l'invention. Un dispositif de transmission 95 est donc prévu entre cette pédale 94 et l'arbre rotatif de commande 90.

Il est à noter que ce dispositif de transmission 95 peut être réduit à sa plus simple expression, c'est-à-dire par exemple sous la forme d'une transmission mécanique. En effet, grâce au fait que le variateur comporte plusieurs roulements inclinés à mouvements déphasés alternativement en prise, le réglage de l'inclinaison des roulements inclinés et du jeu des butées 59, 62 ne nécessite pas l'application d'un effort de commande important, puisque ce réglage est effectué progressivement, roulement par roulement, dans les phases de mouvement où le roulement incliné ne transmet pas d'effort, c'est-à-dire pendant les phases d'accélération et de décélération du poussoir 8 correspondant. De plus, les forces d'inertie des poussoirs se trouvent compensées par construction par le couple de redressement des roulements inclinés ce qui tend à diminuer encore l'effort nécessaire à la commande de la variation d'inclinaison. En pratique, cet effort est limité à l'effort nécessaire pour engendrer la tension en torsion dans un sens ou dans l'autre des ressorts de torsion 89a, 89b interposés entre l'arbre rotatif de commande 90 et chacun des deux arbres secondaires de commande 43a, 43b de chaque ligne d'axe fixe 23a, 23b.

La commande du réglage du rapport de transmission d'un variateur selon l'invention ne nécessite donc pas d'asservissement hydraulique coûteux, encombrant et susceptible d'affecter le rendement global de la transmission.

Dans le mode de réalisation représenté à la figure 13, le variateur selon l'invention est néanmoins doté d'un dispositif de transmission 95 du signal de commande à asservissement électronique.

Ce dispositif de transmission 95 comporte un dispositif électronique 80 de traitement de signal qui élabore un signal 87 de commande pour un moteur électrique 81 dont l'arbre est couplé au pignon 82 de l'arbre rotatif de commande 90. Le dispositif électronique 80 reçoit un signal de position 83 de l'arbre du moteur 81, un signal 84 de vitesse de l'arbre moteur 5 d'entrée du variateur, un signal 85 identifiant le sens du couple transmis par le variateur (sens direct ou rétrograde), et un signal 86 de position de la pédale 94 actionnée par l'utilisateur. Le dispositif électronique 80 est un dispositif informatique et comprend des mémoires vives et mortes et des processeurs de calcul. Il est programmé pour élaborer le signal 87 de commande du moteur électrique 81, ainsi qu'un signal 88 de commande des paramètres thermodynamiques du moteur thermique associé au variateur, notamment de l'ouverture des gaz d'admission délivrés par le carburateur du moteur thermique. Selon l'invention, le dispositif électronique 80 est programmé pour optimiser la consommation spécifique du moteur thermique en ajustant la pression moyenne effective du moteur thermique. Pour ce faire, les caractéristiques d'isoconsommations spécifiques et de pression moyenne effectives en fonction de la vitesse de rotation sont mémorisées dans le dispositif électronique 80.

Chaque ensemble tournant formé du cylindre 15, des pignons 31, 32, des pistons 27, 27', 28, 28' de la couronne 34a, 34b, forme, avec le mécanisme de commande de l'inclinaison représenté figure 13, -et notamment avec chaque ensemble de commande 92a, 92b-, des moyens de contrôle de l'orientation de l'axe 13, 13' des roulements inclinés 7, 7' portés par chaque arbre fixe 2a, 2b.

Dans un variateur selon l'invention, une variation (augmentation ou respectivement réduction) de la puissance transmise peut être obtenue par une variation (réduction respectivement augmentation) de l'inclinaison des roulements inclinés engendrant une variation (augmentation respectivement réduction) de la vitesse du moteur thermique.

L'extrémité libre 58, 58' de chaque poussoir 8, 8' opposée aux portées 19, 19' et 22, 22' coopérant avec les roulements inclinés forme la vis interne d'un deuxième dispositif 9, 9' de transmission constitué d'une vis à billes précontraintes axialement sans recyclage dont le rapport de transmission est fixe. Les mouvements de translation alternatifs axiaux des poussoirs 8, 8' sont ainsi transformés en oscillations angulaires d'un arbre oscillant 10, 10' taraudé formant l'écrou de la vis à bille.

Cet arbre oscillant 10, 10' est relié au pignon de sortie 4a, 4b par l'intermédiaire d'un troisième dispositif 11, 11' de transmission unidirectionnelle (figures 1 et 3) qui transmet le mouvement de l'arbre oscillant dans un seul sens de rotation. Chaque troisième dispositif 11, 11' de transmission unidirectionnelle comporte deux dispositifs de liaison unidirectionnelle 101, 101', 102, 102' montés en sens contraire, à savoir un dispositif interne 101, 101' (101a, 101'a, 101b, 101'b sur la figure 1) rétrograde réalisant un blocage unidirectionnel en sens rétrograde, et un dispositif externe moteur 102, 102' (102a, 102'a, 102b, 102'b sur la figure 1) concentrique du précédent et réalisant un blocage unidirectionnel en sens moteur. Chaque dispositif de liaison unidirectionnelle peut être commandé entre une position active de blocage unidirectionnel et une position inactive laissant l'arbre oscillant 10, 10' et l'organe rotatif 12, 12' reliés au pignon de sortie 4a, 4b libres en rotation l'un par rapport à l'autre.

Chaque dispositif de liaison unidirectionnelle 101, 101', 102, 102' est constitué d'un ressort hélicoïdal dont une extrémité est ancrée dans l'organe rotatif 12, 12' et dont l'autre extrémité coopère avec une portée de friction 103, 103', respectivement 104, 104'. Lorsque la portée de friction est appliquée contre l'extrémité du ressort, celui-ci réalise un blocage unidirectionnel. Au contraire, lorsque cette portée de friction n'est pas appliquée contre l'extrémité du ressort, l'organe rotatif 12, 12' est libre en rotation par rapport à l'arbre oscillant 10, 10'.

Les deux ressorts hélicoïdaux sont montés en sens contraire (c'est-à-dire avec leurs spires s'enroulant en sens contraire) pour réaliser des blocages unidirectionnels dans les deux sens de rotation de l'arbre oscillant 10, 10'. Chaque ressort constitue un dispositif de liaison unidirectionnelle faisant office de roue libre, à savoir l'un dans un sens de rotation de l'arbre oscillant 10, 10' et l'autre dans l'autre sens de rotation de l'arbre oscillant 10, 10'.

Le mécanisme comporte en outre, pour chaque ressort des moyens de contrôle en fonctionnement de la portée de friction mobile de sorte que chaque ressort peut être commandé en fonctionnement, à haute fréquence (pour le mode rétrograde), et indépendamment l'un de l'autre en positon active ou en position inactive. Les deux ressorts sont concentriques. L'arbre oscillant 10, 10' définit deux parois cylindriques s'étendant à l'intérieur respectivement de chaque ressort de sorte que les spires de ces ressorts peuvent venir se serrer contre ces parois cylindriques en position active. Le principe général de fonctionnement d'un tel ressort faisant office de roue libre est connu en lui-même, (notamment des brevets français FR-1.166.870 ou FR-1.540.975). Un effort axial suffisant est appliqué sur la portée de friction 103, 103' 104, 104' contre l'extrémité du ressort de façon à engendrer un serrage des spires du ressort sur la paroi cylindrique de l'arbre oscillant 10, 10' de façon à solidariser dans un sens de rotation l'arbre oscillant 10, 10' et l'organe de sortie 12, 12'. Chaque portée de friction 103, 103', 104, 104' est de forme tronconique pour former un coin s'engageant à l'intérieur du ressort apte à se bloquer en rotation par frottement de contact.

Les portées de friction 103, 103', 104, 104' coopèrent avec une extrémité 105, 105', 106, 106' de chaque ressort respectivement. L'extrémité opposée 107, 107', 108, 108' de chaque ressort est bloquée en rotation par rapport à l'organe rotatif de sortie 12, 12' qui comporte deux mortaises 109, 109', 110, 110' dans lesquelles les extrémités repliées axialement des ressorts sont engagées et ancrées. Par ailleurs, l'organe rotatif de sortie 12, 12' définit deux manchons cylindriques externes s'étendant immédiatement à l'extérieur et le long de chaque ressort respectivement. L'organe rotatif de sortie 12, 12' est accouplé au pignon de sortie 40a de l'axe fixe 23a correspondant. Chaque troisième dispositif 11, 11' de transmission selon l'invention est porté et guidé par rapport au carter 1 du variateur grâce à des roulements à billes 111, 111'.

Le ressort 102, 102' de plus grand diamètre situé à l'extérieur constitue un dispositif de liaison unidirectionnelle dans un sens moteur de l'arbre oscillant 10, 10', c'est-à-dire qu'il entraîne l'organe rotatif de sortie 12, 12' selon ce sens moteur de rotation uniquement lorsque l'arbre oscillant 10, 10' tourne dans ce sens moteur. Pour ce ressort 102, 102', le sens direct est donc le sens moteur de l'arbre oscillant 10, 10'. Les moyens de contrôle de la portée de friction 104, 104' coopérant avec ce ressort 102, 102' comportent une pièce d'embrayage 113, 113' qui forme du côté du ressort une couronne prolongée axialement par une jupe d'extrémité formant la portée de friction 104, 104'. Cette couronne est prolongée axialement de l'autre côté par des lames 114, 114' de liaison. La pièce d'embrayage 113, 113' est bloquée en rotation par rapport à l'arbre oscillant 10, 10', mais est guidée mobile en translation axiale par rapport à cet arbre oscillant 10, 10'. Une couronne 115, 115' associée solidaire de l'arbre oscillant 10, 10' est traversée par les lames de liaison. Des rondelles sont placées autour des lames 114, 114' de liaison et forment des portées 116, 116' inclinées dans lesquelles des patins 117, 117' à section trapézoïdale peuvent être engagées. Les patins 117, 117' ont une forme de volume de révolution ou de prisme. Une rondelle Belleville 118, 118' rappelle la portée de friction en position active. Les patins 117, 117' permettent d'écarter la portée de friction 104, 104' du ressort 102, 102' et de la placer en position inactive à l'encontre de la force de rappel exercée par la rondelle 118, 118'.

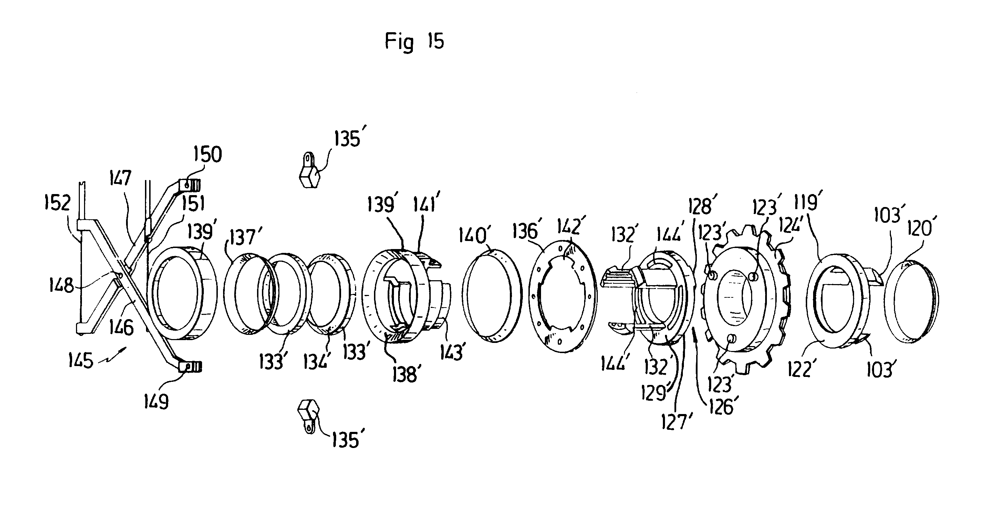

Le dispositif de contrôle du ressort interne de l'un 11' des dispositifs de transmission est représenté plus en détail à la figure 15. Le ressort 101' interne constitue un dispositif de liaison unidirectionnelle en sens rétrograde, c'est-à-dire dans le sens contraire au sens moteur. Pour ce ressort 101', le sens direct est donc le sens rétrograde. Ainsi, le ressort 101' peut être commuté soit dans un mode de fonctionnement dans lequel il transmet un mouvement rétrograde de l'arbre oscillant 10' à l'organe rotatif de sortie 12', soit dans un mode de fonctionnement dans lequel il transmet, uniquement dans le sens moteur de l'arbre oscillant 10', un couple résistant de l'organe rotatif de sortie 12' (frein moteur) à l'arbre oscillant 10', soit dans un mode de fonctionnement où il est inactif en permanence.

Dans le mode de fonctionnement avec frein moteur, lorsque l'arbre oscillant 10' tourne en sens rétrograde et que l'organe rotatif de sortie 12' doit tourner dans le sens moteur, le ressort 101' doit être placé en position inactive, c'est-à-dire qu'il ne doit pas réaliser une liaison unidirectionnelle. Mais, lorsque l'arbre oscillant 10' tourne dans le sens moteur comme l'organe rotatif de sortie 12', pour transmettre un frein moteur entre les deux arbres, le ressort 101' doit être commuté de façon cyclique en fonctionnement à haute fréquence en position active dans le sens moteur de l'arbre oscillant 10' et en position inactive dans le sens rétrograde de l'arbre oscillant 10'.

Au contraire, lorsque le mode de fonctionnement en sens rétrograde (marche arrière) est choisi, le ressort 101' doit être en permanence en position active pour transmettre les oscillations en sens rétrograde de l'arbre oscillant 10' en un mouvement rétrograde de l'organe rotatif de sortie 12'.

La portée de friction 103' du ressort 101' est formée de trois ergots répartis angulairement à 120° les uns des autres s'étendant en saillie axiale vers le ressort 101' et portés par une couronne 119' percée. Une rondelle Belleville 120' est placée autour des ergots et prend appui d'un côté sur la couronne 119' et de l'autre sur une portée radiale 121' (figure 3) de l'arbre oscillant 10' pour repousser la portée de friction 103' en position inactive. Les ergots dont le nombre peut être différent de trois forment la portée de friction 103'.

La face radiale 122' de la couronne 119' et qui est opposée axialement aux ergots est repoussée par la rondelle 120' au contact d'une pluralité de poussoirs 123' s'étendant parallèlement à l'axe fixe 23a, uniformément répartis autour de cet axe et montés librement coulissants en translation axiale à travers un pignon 124' qui est lui-même monté rotatif par rapport au carter 1 autour de l'axe fixe 23a grâce à un roulement à billes 125' (figure 3). Les poussoirs 123' sont commandés dans leur mouvement de translation axiale par une came 126' à échancrures axiales 127' et bossages axiaux 128' formés sur une face radiale d'une couronne de commande 129'. La couronne de commande 129' est montée sur un support 130' cylindrique (figure 3) solidaire du carter 1 par l'intermédiaire de cannelures axiales 131' qui bloquent la couronne 129' de commande en rotation mais autorisent ses mouvements en translation axiale.

La couronne 129' de commande est prolongée axialement à l'opposé de la came 126' par des lames 132' de liaison qui portent deux rondelles 133' et définissant entre elles des portées inclinées internes 134' coopérant avec des patins de commande 135' qui peuvent être engagés entre ces portées inclinées 134' lorsqu'ils sont rapprochés radialement de l'axe fixe 23a de l'arbre fixe 2a.

Les extrémités libres des lames de liaison 132' forment un épaulement en saillie vers l'extérieur retenant la rondelle d'extrémité 133'. L'autre rondelle 133' prend appui sur une couronne 136' fixée au carter 1, et les lames de liaison 132' traversent le perçage axial de cette couronne 136'. Une rondelle Belleville 137' prend appui d'un côté sur une face radiale du carter 1 et de l'autre sur les extrémités libres des lames 132' de liaison (figure 3) pour repousser axialement la came 126' au contact des poussoirs 123'. La rondelle Belleville 137' constitue donc un moyen de rappel de la portée de friction 103' en position appliquée contre l'extrémité correspondante du ressort 101'.

La force de rappel axiale exercée par cette rondelle Belleville 137' est supérieure à la force de rappel axiale exercée par la rondelle Belleville 120' précédemment décrite montée en sens opposé autour des ergots formant la portée de friction 103'. Le pignon 124' est entraîné en rotation par l'intermédiaire d'une chaîne et d'un dispositif d'entraînement (figure 14) de façon synchronisée avec la vitesse de rotation de l'arbre moteur 5 du variateur qui génère les mouvements alternatifs du poussoir 8' et les oscillations alternatives de l'arbre oscillant 10' par l'intermédiaire de la vis à billes 30. Lors de la rotation du pignon 124', les poussoirs 123' viennent alternativement au contact des bossages 128' et des échancrures 127', ce qui engendre des mouvements alternatifs de translation axiale de la portée de friction 103'. Ainsi, lorsque les patins 135' de commande ne sont pas engagés dans la gorge formée par les portées inclinées 134', la portée de friction 103' est alternativement commandée en position active et en position inactive par la came 126' grâce à la rotation du pignon 124'.

Lorsque les patins 135' sont engagés au contact des portées inclinées internes 134', la came 126' est écartée des poussoirs 123' à l'encontre de la force de rappel de la rondelle 137', et la portée de friction 103' est en permanence en position inactive.

Le ressort 101' réalisant un blocage en sens rétrograde, les bossages 128' commandant la portée de friction 103' en position active sont répartis sur la came 126' de façon que ce ressort 101' réalise un blocage unidirectionnel en sens rétrograde lorsque l'arbre oscillant 10' tourne dans le sens moteur. Dès lors, un couple résistant peut être transmis de l'organe de sortie 12' à l'arbre oscillant 10' lorsque ce dernier tourne en sens moteur. On réalise ainsi un frein moteur.

Le ressort 101' est aussi utilisé pour réaliser un blocage unidirectionnel en sens rétrograde lorsque l'arbre oscillant 10' tourne dans le sens rétrograde afin de transmettre un mouvement de marche arrière.

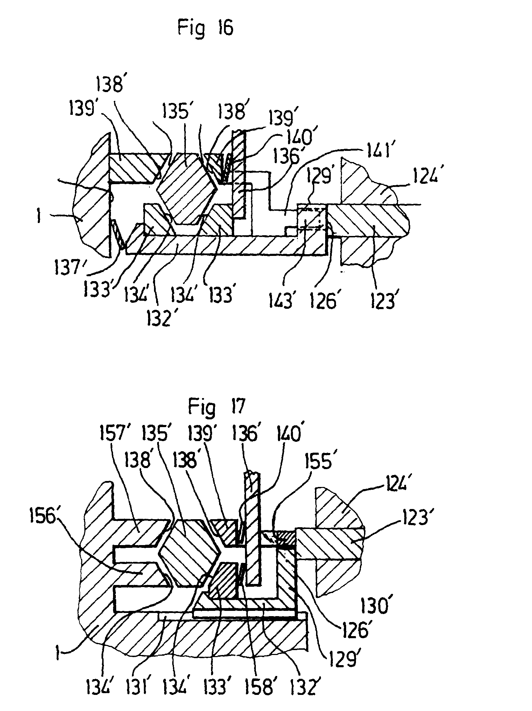

Pour ce faire, les patins 135' de commande ont une section double trapézoïdale, c'est-à-dire en forme de losange dont les sommets radiaux sont tronqués pour former deux trapèzes reliés par leur plus grande base (figure 16). Les patins 135' sont constitués d'une portion de volume de révolution ou de prisme.

Les surfaces externes inclinées des patins 135' peuvent être engagés entre des portées inclinées externes 138' ménagées dans des rondelles 139' externes, entourant les rondelles 133' précédemment décrites. Les portées inclinées 138' forment une gorge de section évasée vers l'axe 23a de l'arbre fixe 2a correspondant, et qui est symétrique de la gorge interne formée par les portées inclinées internes 134' précédemment décrites. La rondelle externe 139' extrême vient en appui contre la face radiale du carter 1. L'autre rondelle 139' vient en appui contre la couronne 136' solidaire du carter 1 par l'intermédiaire d'une rondelle Belleville 140' qui la repousse élastiquement vers le patin de commande 135'. Cette rondelle 139' est prolongée axialement jusqu'à la came 126' par trois extensions axiales 141' (figure 15) s'étendant entre les lames de liaison 132' à travers des échancrures 142' du perçage axial de la couronne 136'.

Les extrémités libres 143' de ces extensions 141' sont engagées dans des lumières 144' de forme cylindrique ménagées axialement à travers la couronne 129' de commande. Ainsi, les extrémités libres 143' cylindriques des extensions axiales 141' peuvent traverser la couronne 129' pour venir combler les échancrures 127' entre les bossages 128' de la couronne 129' (figure 15).

Les lames de liaison 132' s'étendent axialement en regard de chacun des bossages 128' de la came 126'.

Ainsi, lorsque les patins 135' sont écartés radialement vers l'extérieur au contact des portées 138' inclinées externes, la rondelle 139' est repoussée axialement à l'encontre de la rondelle Belleville 140' et les extrémités libres 143' des extensions axiales 141' viennent combler les échancrures 127' de la came 126'.

Ce faisant, la portée de friction 103' reste en permanence en position active, le ressort 101' réalisant un blocage unidirectionnel dans le sens rétrograde. L'organe de sortie 12' est alors entraîné en sens rétrograde par les oscillations, en sens rétrograde, de l'arbre oscillant 10'. En position neutre des patins 135' (figures 3 et 16), les bossages 128' et les échancrures 127' de la came 126' coopèrent avec les poussoirs 123' pour commander de façon cyclique la portée de friction 103'. Et lorsque les patins 135' sont rapprochés radialement au contact des portées inclinées 134' internes, la portée de friction 103' est en position inactive.

La rondelle Belleville 140' repousse la rondelle 139' dans une position où les extrémités libres des extensions axiales ne comblent pas les échancrures 127', et ce lorsque les patins 135' sont en position neutre ou rapprochés vers l'intérieur radialement.

La figure 15 représente également un mode de réalisation des moyens 145 de manoeuvre des différents patins de commande 135, 135', 117, 117'. Ces moyens 145 de manoeuvre sont constitués d'une pince comprenant deux bras articulés 146, 147 autour d'un axe 148 parallèle à l'axe 23a de l'arbre fixe 2a correspondant.

Les patins 135, 135' ou 117, 117' sont montés articulés aux extrémités des bras 146, 147 autour d'un axe 149, 150 parallèle à l'axe 148 d'articulation des bras et à l'axe fixe 23a de l'arbre oscillant 10' et de l'arbre fixe 2a correspondant.

Un câble 151 de commande permet de resserrer la pince ainsi réalisée et de rapprocher radialement les patins.

Un autre câble 152 de commande disposé à l'opposé de l'axe 148 d'articulation par rapport au premier, permet d'écarter les bras 146, 147 et donc les patins radialement vers l'extérieur. Des moyens de manoeuvre similaires sont utilisés pour les patins 117, 117' du dispositif de contrôle du ressort 102, 102' externe.

Les moyens de contrôle du ressort 101' peuvent faire l'objet d'autres variantes de réalisation. Par exemple, les bossages 128' de la came 126' peuvent être disposés pour écarter la portée de friction 103' de l'extrémité du ressort 101', des moyens de rappel étant prévus pour appliquer cette portée de friction 103' en position active contre l'extrémité du ressort 101'. On peut ainsi mieux contrôler l'effort axial d'application de la portée de friction 103' sur le ressort 101' comme indiqué précédemment. Egalement, le nombre des poussoirs 123', des échancrures 127' et des bossages 128', des lames de liaison 132' et des extensions axiales 141' peut être différent de trois. Les ergots formant la portée de friction 103' peuvent également être remplacés par une jupe d'extrémité telle que décrite pour la portée de friction 104, 104' du ressort externe 102, 102'.

La figure 17 représente une variante de réalisation de la figure 16 dans laquelle les extensions axiales 141' viennent en butée axialement sur un manchon cylindrique 155' périphérique complet qui vient coiffer à l'extérieur la couronne 129' formant la came 126' pour inactiver cette came. Lorsque les patins 135' sont écartés vers l'extérieur, le bord extrême libre du manchon 155' vient repousser les poussoirs 123'. Par ailleurs, les rondelles extrêmes formant les portées inclinées extrêmes internes et externes sont remplacées par des prolongements 156', 157' solidaires du carter 1. La rondelle interne 133' formant la portée inclinée interne 134' du côté du ressort est portée par les lames de liaison 132' et prend appui contre la couronne 136' solidaire du carter 1 par l'intermédiaire d'une rondelle Belleville 158' qui la repousse vers le patin de commande 135'. Dès lors, en position neutre du patin de commande 135', le dispositif de transmission unidirectionnelle est inactif, la portée de friction 103' n'étant pas engagée contre le ressort 101'. Lorsque les patins de commande 135' sont engagés dans les portées inclinées internes 134', la came 126' coopère avec les poussoirs 123' et le ressort 101' est activé dans le mode de fonctionnement avec frein moteur. Lorsque les patins de commande 135' sont écartés dans les portées inclinées externes 138', le ressort 101' est activé dans le mode de fonctionnement en sens rétrograde.

La figure 14 représente un mode de réalisation du dispositif d'entraînement des pignons 124a, 124'a, 124b, 124'b de commande des ressorts internes 101, 101' formant les dispositifs de liaison unidirectionnelle en sens rétrograde des quatre dispositifs 11a, 11'a, 11b, 11'b de transmission unidirectionnelle du variateur. L'arbre moteur 5 portant le pignon engrènant avec les pignons d'entrée 3a, 3b est prolongé axialement pour porter et entraîner en rotation des pignons 161a, 161'a, 161b, 161'b à chaîne reliés chacun par une chaîne 162a, 162'a, 162b, 162'b au pignon 124a, 124'a, 124b, 124'b de commande des ressorts de liaison unidirectionnelle. Le rapport de transmission défini par ces pignons et ces chaînes est adapté en fonction du nombre de bossages et d'échancrures de la came 126' commandant la portée de friction 103, 103' du ressort 101, 101'. Sur la figure 14, sont également représentés les deux pignons de sortie 4a, 4b engrenés avec le pignon 6 formant l'arbre récepteur.

La figure 9 est un graphe illustrant les mouvements générés par le variateur sur l'arbre récepteur 6 à partir de la rotation de l'arbre moteur 5. Sur cette figure, on a représenté quatre courbes Ca, Cb, C'a et C'b représentant respectivement les vitesses de translation des quatre poussoirs .8a, 8b, 8'a, 8'b, ou encore les vitesses de rotation des quatre arbres oscillants 10a, 10b, 10'a, 10'b (figure 1) déphasés de 90° les uns par rapport aux autres.

Grâce aux troisièmes dispositifs 11a, 11'a, 11b, 11'b de transmission unidirectionnelle les vitesses positives des quatre arbres oscillants sont transmises sur l'arbre récepteur 6 lorsque le variateur est commandé dans un mode de fonctionnement en sens moteur. Plus exactement, les dispositifs 11a, 11'a, 11b, 11'b de transmission unidirectionnelle n'accouplent les arbres oscillants à l'arbre récepteur 6 que dans les portions à vitesse constante des arbres oscillants. Comme on le voit, ces portions à vitesse constante se succèdent continûment de sorte que l'arbre récepteur 6 tourne uniformément à la vitesse VS. L'amplitude d'oscillation des arbres oscillants dépend de la valeur de l'angle d'inclinaison des roulements inclinés des premiers dispositifs 7a, 7'a, 7b, 7'b de transmission.

Aussi les deuxièmes 9a, 9b, 9a',9b' et troisièmes 11a, 11b, 11'a, 11'b dispositifs de transmission constituent des moyens de transmission adaptés pour que, dans chaque phase du mouvement, l'un ou moins des roulements inclinés 7a, 7b, 7'a, 7'b soit en prise et transmette un effort, tandis que l'un au moins des roulements inclinés 7a, 7b, 7'a, 7'b (notamment les trois autres dans le premier mode de réalisation représenté, et au moins ceux portés par l'autre arbre fixe et dont l'inclinaison est contrôlée par un autre ensemble tournant) n'est pas en prise et ne transmet pas d'effort à l'arbre récepteur 6.

Sur la figure 9, on a représenté l'effet d'une modification d'inclinaison des roulements inclinés à partir d'une action schématisée par la flèche F1 de l'utilisateur sur la pédale 94 de commande. Cette action tend à diminuer l'inclinaison des roulements inclinés par rapport à l'axe fixe 23a, 23b des arbres fixes 2a, 2b.

La figure 10 représente plus en détail l'allure de la . vitesse d'un poussoir 8a lors d'une modification d'inclinaison du roulement incliné. Comme on l'a vu précédemment, les roulements inclinés ne voient leur inclinaison modifiée que dans leur phase d'accélération ou de décélération, c'est-à-dire en dehors des phases le troisième dispositif 11a, 11'a, 11b, 11'b de transmission unidirectionnelle correspondant est en prise dans le sens moteur où les poussoirs correspondants ont une vitesse constante.

A la fin d'une période d'accélération du poussoir 8a, le roulement incliné a son inclinaison diminuée. L'arbre moteur 5 tournant à vitesse constante, il en résulte dans un premier temps une diminution de la vitesse du poussoir 8a en fin de période d'accélération. Néanmoins, dès que le dispositif de liaison unidirectionnelle 101a en sens rétrograde correspondant est embrayé et que le dispositif de liaison unidirectionnelle en sens rétrograde 101'b qui était actif immédiatement avant est débrayé, la vitesse de l'arbre moteur 5 peut accélérer selon la pente montante P représentée à la figure 10.

La vitesse du poussoir 8a augmente donc avec celle du moteur thermique associé à l'arbre moteur 5 jusqu'à rejoindre la vitesse VS de l'arbre récepteur 6 supposée uniforme et imposée par la charge. L'amplitude de la course du poussoir 8a et la période de temps nécessaire à cette course est diminuée d'une valeur proportionnelle à la diminution d'inclinaison prise par le roulement 14a, 18a incliné correspondant.

Les autres roulements inclinés voient leur inclinaison modifiée successivement les uns après les autres de la même façon jusqu'à la valeur imposée par la commande de l'utilisateur, c'est-à-dire par la rotation de l'arbre de commande 90 (figure 13). On obtient ainsi une augmentation de la puissance transmise par le variateur grâce à une augmentation de la vitesse de rotation de l'arbre moteur 5 et du moteur thermique associé, la vitesse de l'arbre récepteur 6 étant supposée constante.

Les figures 11 et 12 illustrent l'allure des courbes de vitesse lors d'une augmentation de l'inclinaison des roulements inclinés en vue d'une diminution de la puissance transmise. Du fait de l'augmentation de l'inclinaison du roulement incliné 14a, 18a, le poussoir 8a tendrait à avoir sa vitesse dépasser celle VS de l'arbre récepteur 6 en fin de période d'accélération. Cette vitesse est néanmoins limitée à celle de l'arbre récepteur 6 compte-tenu de l'embrayage du dispositif de liaison unidirectionnelle 101a en sens rétrograde en fin de période d'accélération. L'amplitude des mouvements de translation de chacun des poussoirs augmente donc successivement et la vitesse de rotation de l'arbre moteur 5 ainsi que du moteur thermique associé diminue en conséquence.

La flèche F2 schématise l'instant où l'utilisateur actionne la pédale de commande 94 en vue de la diminution de puissance, c'est-à-dire l'instant où l'arbre de commande 90 subit une rotation.

Comme cela apparaît des figures 9 et 11, le variateur selon l'invention permet de générer des mouvements à vitesse uniforme sur l'arbre récepteur 6 qui se succèdent continûment. Le rapport de transmission du variateur est déterminé d'une part, par les possibilités d'inclinaison des différents roulements inclinés, et d'autre part; par les rapports de diamètre des différents organes tournants accouplés en rotation. La puissance maximum qu'un tel variateur peut transmettre est également limitée par les valeurs des pressions de Hertz au niveau des contacts entre les portions de couronne des cages intérieures des roulements inclinés et les portées latérales solidaires des poussoirs en contact avec ces portions de couronnes. En pratique, il peut être déterminé par calcul qu'avec un variateur selon l'invention dont l'encombrement est sensiblement inférieur à celui d'une boîte de vitesse automatique traditionnelle, la puissance admissible correspond à celle de la plupart des moteurs thermiques utilisés pour les véhicules automobiles. Néanmoins, la puissance maximum que le variateur selon l'invention peut transmettre peut être aisément augmentée avec peu de modification, selon les besoins.

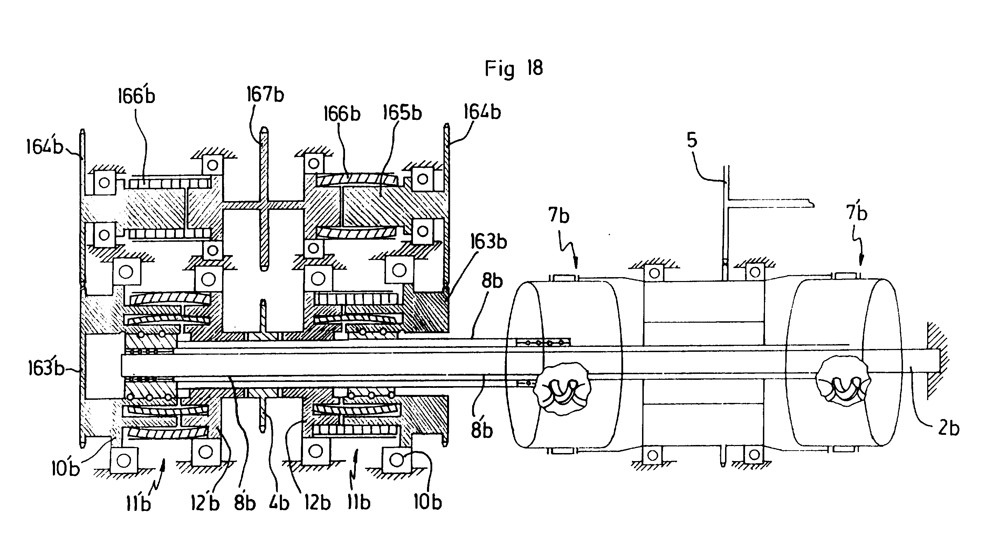

Par exemple, on peut doubler cette puissance en transmettant à l'arbre récepteur les mouvements de vitesse négative de chacun des poussoirs 8a, 8b, 8'a, 8'b. La figure 18 illustre schématiquement une telle variante de réalisation. Dans cette variante, chaque arbre oscillant 10b, 10'b est accouplé à un pignon 163b, 163'b qui engrène avec un pignon 164b, 164'b solidaire en rotation d'un arbre oscillant 165b, 165'b dont les mouvements de rotation sont en sens inverse de l'arbre oscillant 10b, 10'b. Un ressort à spires 166b, 166'b faisant office de roue libre transmet les oscillations de l'arbre 165b, 165'b dans le sens moteur à un deuxième pignon de sortie 167b accouplé à l'arbre récepteur 6. Les dispositifs de liaison unidirectionnelle 166, 166'b formés par les ressorts sont adaptés pour transmettre les mouvements dans le sens moteur uniquement et peuvent être commutés en position active et en position inactive par des dispositifs de commande similaires à ceux précédemment décrits pour les dispositifs 102, 102' de liaison unidirectionnelle dans le sens moteur. Bien évidement cette variante décrite uniquement en référence au deuxième axe fixe 23b est également utilisée pour le premier axe fixe 23a. Dans ces conditions, la puissance transmise à l'arbre récepteur 6 est doublée.

Egalement, il est possible d'associer à chaque roulement incliné non pas un seul poussoir 8a, 8b, 8'a, 8'b, mais plusieurs poussoirs, par exemple deux poussoirs. Le deuxième poussoir peut coopérer avec une portion de couronne diamétralement opposée à la première précédemment décrite. Et le deuxième poussoir d'un ensemble de transmission est associé au même dispositif de transmission unidirectionnelle que le premier poussoir de l'autre ensemble de transmission disposé autour du même axe fixe. La puissance maximum transmissible est ainsi doublée.

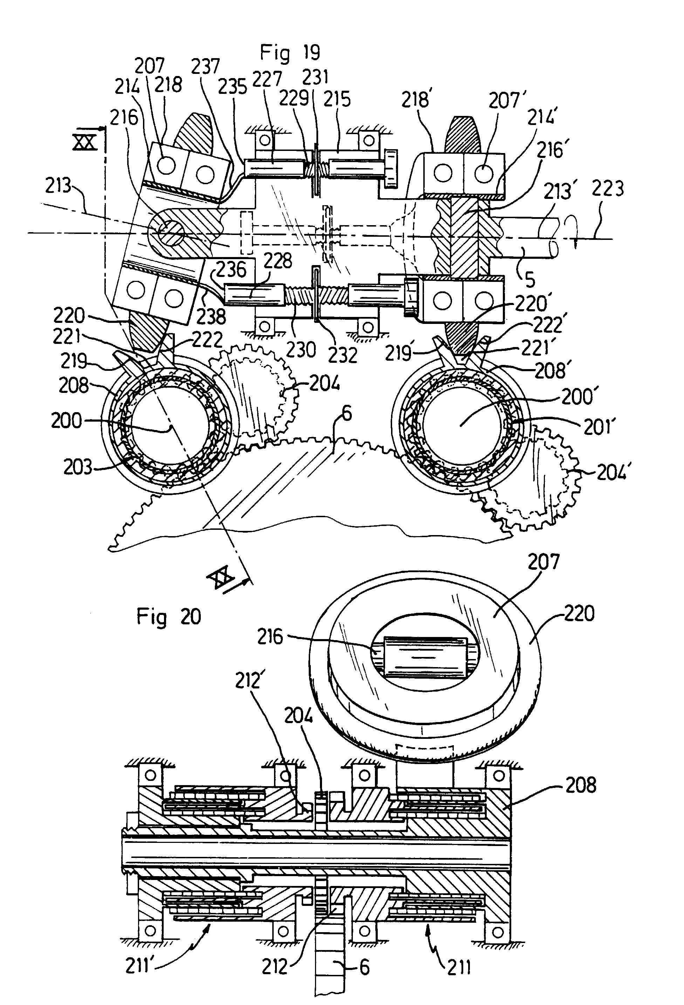

Les figures 19 et 20 représentent un deuxième mode de réalisation d'un variateur selon l'invention qui comprend uniquement deux roulements inclinés 207, 207' entraînés tous deux en rotation autour d'un même axe fixe unique 223. Les deux roulements inclinés 207, 207' ne sont pas en opposition de phase, mais sont déphasés de 90° l'un par rapport à l'autre. Ces deux roulements 207, 207' définissent des axes 213, 213' inclinés par rapport à l'axe fixe 223. Ainsi, au cours de la rotation, les axes 213, 213' tournent autour de l'axe fixe 223 en décrivant un cône, le plan radial du roulement 207, 207' oscillant régulièrement de part et d'autre d'un plan radial perpendiculaire à l'axe fixe 223. Les deux axes 213, 213' présentent le même angle d'inclinaison par rapport à l'axe fixe 223 correspondant mais sont déphasés de 90° l'un de l'autre (relativement au mouvement rotatif moteur), cet angle de déphasage restant constant au cours du mouvement. Chacun des mouvements d'oscillation du roulement 207, 207' dans un sens et dans l'autre est transmis à l'arbre récepteur 6 qui, dans l'exemple des figures 19 et 20 est une couronne dentée.

Ce deuxième mode de réalisation diffère également du premier en ce que les poussoirs 8, 8' du premier mode de réalisation sont remplacés par des poussoirs 208, 208' montés librement rotatifs et oscillants autour d'un axe fixe 200, 200' qui est perpendiculaire à l'axe fixe 223 des roulements 207, 207'. En outre, le mouvement moteur est reçu par la cage intérieure 214, 214' des roulements 207, 207'. Ainsi, dans ce mode de réalisation, c'est la cage intérieure 214, 214' de chaque roulement 207, 207' qui constitue la cage d'entrée recevant le mouvement moteur par l'intermédiaire d'un ensemble monté rotatif autour de l'axe fixe 223, et comprenant un cylindre 215 monté rotatif par rapport au châssis du variateur et entraîné en rotation, de façon similaire aux cylindres 15a, 15b du variateur selon le premier mode de réalisation représenté figure 1.

Chaque poussoir 208, 208' rotatif coopère avec la cage de sortie extérieure 218, 218' du roulement incliné 207, 207' correspondant pour recevoir les mouvements d'oscillation de cette cage extérieure et les transmettre à la couronne 6 réceptrice par l'intermédiaire d'un mécanisme de transmission unidirectionnelle 201, respectivement 201' qui a pour fonction de transformer les mouvements d'oscillation du poussoir 208, 208' correspondant en un mouvement rotatif dans un seul sens de la couronne réceptrice 6.

Le cylindre 215 comporte un mécanisme de contrôle et de réglage de l'orientation de l'axe 213, 213' de chaque roulement 207, 207' par rapport à l'axe fixe 223.

Pour le premier roulement incliné 207, le cylindre 215 comprend deux pistons 227, 228 s'étendant parallèlement à l'axe fixe 223, qui sont taraudés en sens inverse et engagés respectivement dans des filetages correspondant de vis 229, 230 portées par des pignons 231, 232, qui sont eux-mêmes montés rotatifs sur le cylindre 215 de façon à pouvoir s'engrener avec une couronne de commande qui peut être l'une des couronnes 34a, 34b du mécanisme de commande de la figure 13. Lorsque cette couronne de commande tourne par rapport au cylindre 215, les pignons 231 et 232 tournent autour de leur axe, et les pistons 227, 228 coulissent en translation parallèlement à l'axe fixe 223. Les deux pistons 227, 228 sont taraudés en sens inverse, et les filetages des vis 229, 230 sont ménagés en sens inverse. De la sorte, lorsque le premier piston 227 se déplace en translation parallèlement à l'axe 223 dans un sens, l'autre piston 228 se déplace en translation parallèlement à l'axe fixe 223 dans l'autre sens. Le fonctionnement est donc similaire au mécanisme de contrôle de l'orientation de l'axe des roulements décrits en référence au premier mode de réalisation de la figure 1 (pistons 27, 27', 28, 28', filetages 29, 29, 30, 30', pignons 31, 32).

Les extrémités libres 235, 236 de chaque piston 227, 228 viennent en appui contre une portée latérale 237, 238 solidaire de la cage intérieure d'entrée 214 du roulement 207.

Sur la figure 19, on a représenté à l'opposé axialement de chaque piston 227, 228, deux autres pistons s'étendant de l'autre côté de chaque pignon correspondant 231, 232 et portant des masselottes d'équilibrage à leurs extrémités libres. De la sorte, on assure l'équilibrage du mécanisme.

L'autre roulement incliné 207' a son inclinaison contrôlée par un mécanisme similaire représenté en pointillé figure 19.

Néanmoins, les deux mécanismes de contrôle d'inclinaison des deux roulements 207, 207' ne sont pas commandés par la même couronne de commande, de sorte que chacun des roulements inclinés 207, 207' a son inclinaison modifiée indépendamment l'un de l'autre.

Pour la commande de l'inclinaison de chacun des roulements 207, 207', on peut par exemple utiliser l'ensemble de commande représenté figure 13, et accoupler les pistons 231, 232 du premier roulement incliné 207 à une première couronne de commande 34a, et les pignons commandant l'inclinaison de l'autre roulement incliné 207', qui sont légèrement décalés axialement par rapport au premier, sur la deuxième couronne de commande 34b.

Le cylindre 215 est prolongé axialement du côté de chaque roulement 207, 207'.

La cage intérieure d'entrée 214, 214' de chaque roulement 207, 207' est reliée à un prolongement du cylindre 215 par un axe transversal 216, 216' perpendiculaire à l'axe fixe 223. Chaque axe transversal 216, 216' solidarise, en rotation autour de l'axe fixe 223, la cage intérieure 214, 214' et le cylindre 215. Néanmoins, chaque axe transversal 216, 216' autorise les pivotements de la cage d'entrée interne 214, 214' du roulement incliné par rapport à cet axe transversal 216, 216' lors des variations d'inclinaison de l'axe 213, 213'. Les deux axes transversaux 216, 216' sont orthogonaux l'un à l'autre.

La cage externe de sortie 218, 218' de chaque roulement incliné comprend une couronne ou une portion de couronne 220, 220' s'étendant en saillie radialement vers l'extérieur dans une gorge 221, 221' définie par et entre deux portées radiales 219, 219', 222, 222' solidaires du poussoir 208, 208'. Cette couronne 220, 220' et ces portées définissent des surfaces de contact de formes complémentaires définies pour rouler l'une sur l'autre en assurant une vitesse de la rotation du poussoir 208, 208' correspondant qui reste constante pendant au moins un quart de tour de la rotation du cylindre 215 et des cages intérieures 214, 214' des roulements 207, 207'. Dans le cas de poussoirs oscillants en rotation 208, 208', ces formes complémentaires peuvent être définies de façon similaire à celles d'un engrenage.

De même que dans le premier mode de réalisation de la figure 1, un mécanisme de réglage du jeu entre les portées 219, 222, et, respectivement 219', 222' de part et d'autre de la portion de couronne 220, 220', peut être prévu. Par exemple, l'une 222 des portées peut être montée fixe par rapport au poussoir 208, tandis que l'autre 219 est montée mobile tangentiellement entre deux positions extrême dont l'une est écartée de la portée 222 fixe tandis que l'autre est rapprochée de la portée 222 fixe en regard. Une pièce en forme de coin, parallèle à l'axe 200 de rotation du poussoir 208, est montée mobile axialement de façon à pouvoir être plus ou moins engagée dans un espace ménagé entre une portée radiale solidaire du poussoir 208 et une face d'appui en regard de la portée 219. Lorsque cette pièce en forme de coin est totalement engagée, la portée 219 est dans sa position la plus rapprochée de la portée 222, le jeu étant minimum. Au contraire, lorsque cette pièce en forme de coin est totalement dégagée axialement, la portée 219 est écartée de la portée 222, l'écartement étant maximum. La position axiale de la pièce en forme de coin peut être contrôlée grâce à un pignon monté rotatif autour de l'axe 200, et qui peut coopérer avec le mécanisme de commande de la figure 13 de façon similaire aux pignons 42a, 42b.

Chaque mécanisme de transmission unidirectionnelle 201, 201' permet de transformer et de transmettre à la couronne réceptrice 6 les mouvements d'oscillation de chaque poussoir 208, 208', en entraînant cette couronne réceptrice 6 dans un seul sens de rotation.

Pour ce faire, on peut utiliser des dispositifs de transmission unidirectionnelle similaires aux troisièmes dispositifs de transmission unidirectionnelle 11, 11' décrits en référence au premier mode de réalisation des figures 1 à 3. Par exemple, il suffit de solidariser en rotation les deux arbres oscillants 10a, 10'a du premier mode de réalisation de la figure 1 au poussoir oscillant 208 du deuxième mode de réalisation de la figure 19, et les deux arbres oscillants 10b, 10'b au poussoir oscillant 208'.

La figure 20 représente de façon uniquement schématique, de façon similaire à la figure 1, les deux dispositifs 211, 211' de transmission unidirectionnelle du mécanisme 201 de transmission unidirectionnelle. La structure peut être similaire à celle représentée figure 2 et 3. En particulier, chaque dispositif comporte deux ressorts hélicoïdaux montés en sens contraire et des moyens de commande selon un mode moteur avec frein moteur et/ou selon un mode rétrograde et/ou selon un mode point mort. L'un 211 des dispositifs de transmission unidirectionnelle comprend un pignon rotatif de sortie 212 engrènant directement avec la couronne réceptrice 6, et, l'autre dispositif de transmission unidirectionnelle 211' comprend un pignon rotatif de sortie 212' qui engrène avec la couronne réceptrice 6, par l'intermédiaire d'un engrenage inverseur 204, 204'.

Comme on le voit sur les figures 19 et 20, ce deuxième mode de réalisation est simplifié en ce sens que le variateur ne comporte que deux roulements inclinés, et ne comporte pas de vis à billes. En outre, la dimension du variateur est encore réduite du fait notamment que les poussoirs 208, 208' oscillent en rotation et non plus en translation. On peut considérer que, ce deuxième mode de réalisation diffère du premier mode de réalisation, en ce que chacune des deux paires de roulements d'un même arbre fixe 2a, 2b est rassemblée en un seul roulement incliné dont les mouvements d'oscillation dans les deux sens sont transmis à la couronne réceptrice 6, les arbres oscillants 10, 10' faisant office de poussoirs rotatifs directement entraînés par les roulements inclinés.

Comme on le voit figure 19, l'arbre moteur 5 peut être directement accouplé au cylindre 215, en prolongement de ce cylindre 215, à l'opposé de l'un 207' des roulements inclinés.

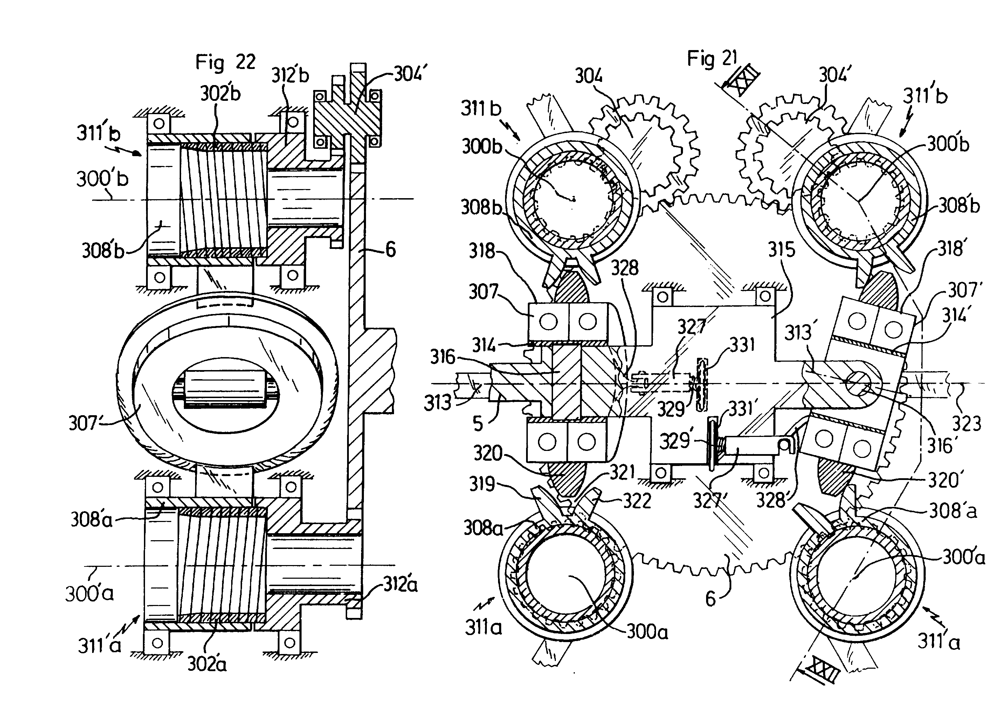

Dans le troisième mode de réalisation des figures 21 et 22, le variateur selon l'invention comprend encore deux roulements inclinés 307, 307' montés de façon similaire au deuxième mode de réalisation sus-décrit. Le variateur de ce troisième mode de réalisation est plus adapté à une transmission pour cycle. Cette transmission simplifiée permet de transmettre à la couronne 6 réceptrice un mouvement de rotation dans un seul sens moteur, à partir d'un mouvement de rotation de l'arbre moteur 5 accouplé à un pédalier, par exemple par l'intermédiaire d'une transmission à pignons coniques non représentée.

L'arbre moteur 5 est accouplé directement aux cages internes d'entrée 314, 314' de roulements inclinés 307, 307', grâce à des axes transversaux 316, 316'. L'inclinaison de l'axe 313, 313' de chaque roulement 307, 307' est contrôlée de façon similaire au deuxième mode de réalisation grâce à un pignon 331, 331' porté par le cylindre 315. Le pignon 331, 331' porte une vis 329, 329' dont le filetage coopère avec un taraudage d'un piston 327, 327'. L'extrémité libre du piston 327, 327' est en forme de chape recevant un axe solidaire d'une extension 328, 328' de la cage intérieure 314, 314'. Chaque piston 331, 331' est commandé en rotation par rapport au cylindre 315 par un mécanisme de commande de l'inclinaison similaire à celui représenté figure 13 mais qui peut être également simplifié dans cette variante. En effet, à la place du moteur électrique 81, l'arbre de commande 90 peut être directement actionné par l'utilisateur par l'intermédiaire d'une transmission à câble traditionnelle.

En outre, le mécanisme de la figure 13 utilisé avec le troisième mode de réalisation peut être simplifié. En particulier, ce troisième mode de réalisation ne nécessite pas de mécanisme de réglage du jeu entre les portés de contact de chaque poussoir. En conséquence, le mécanisme de commande du réglage de ce jeu n'est pas nécessaire.

De même que dans le deuxième mode de réalisation, chaque roulement incliné 307, 307' a sa cage extérieure de sortie 318, 318' qui porte une couronne 320, 320' coopérant avec deux poussoirs 308a, 308b, 308'a, 308'b, disposés diamétralement opposés l'un de l'autre par rapport au roulement incliné 307, 307' correspondant.

Chaque poussoir est constitué d'un cylindre monté librement rotatif autour d'un axe 300a, 300b, 300'a, 300'b orthogonal à l'axe fixe 323 de l'arbre moteur 5. Chaque poussoir est monté librement rotatif par rapport au châssis du variateur par l'intermédiaire de roulements. Chacun des poussoirs 308a, 308b, 308'a, 308'b est similaire aux poussoirs 208, 208' décrits en référence au deuxième mode de réalisation. Il en va de même des couronnes 320, 320' des roulements 307, 307'. Ainsi, les poussoirs portent des portées 319, 322 définissant une gorge 321 recevant la couronne 320, 320' du roulement incliné 307, 307' correspondant.

Un dispositif de liaison unidirectionnelle 311a, 311b, 31l'a, 311'b à ressort hélicoïdal permet de transmettre les oscillations de chaque poussoir 308a, 308b, 308'a, 308'b correspondant à la couronne réceptrice 6.

Le dispositif de liaison unidirectionnelle 311a, 311'a comprend un ressort hélicoïdal 302'a qui relie le poussoir 308a, 308'a inférieur à un organe rotatif de sortie 312'a portant un pignon directement engrené sur la couronne réceptrice 6 pour une transmission unidirectionnelle dans le sens moteur.

Le ressort hélicoïdal 302'b du dispositif de liaison unidirectionnelle supérieur 311b, 311'b est enroulé en sens opposé et permet de transmettre les mouvements en sens rétrograde du poussoir 308b, 308'b. L'organe rotatif de sortie 312'b est relié à la couronne réceptrice 6 par l'intermédiaire d'un engrenage inverseur 304, 304'. Ainsi, lorsque le roulement incliné 307, 307' pivote dans un sens, le mouvement est transmis par l'intermédiaire du dispositif de liaison unidirectionnelle 311a, 311'a inférieur, et lorsqu'il pivote dans l'autre sens, le mouvement est transmis par le dispositif de liaison unidirectionnelle 311b, 311'b supérieur, la couronne réceptrice 6 étant entraînée dans tous les cas dans le même sens moteur de rotation.

La couronne réceptrice 6 peut être directement accouplée au moyeu d'une roue de bicyclette. Le mécanisme de contrôle de l'inclinaison (non représenté sur les figures 21 et 22) est incorporé à l'intérieur d'un carter formant le châssis et renfermant les différentes éléments du variateur selon l'invention.

Grâce à la présence des roulements inclinés 307, 307' déphasés de 90°, lorsque l'utilisateur actionne une modification d'inclinaison, le mécanisme de commande impose progressivement la modification d'inclinaison de chacun des roulements 307, 307', dans une phase de mouvement où ce roulement n'est pas en prise sur la couronne réceptrice 6 et où les deux dispositifs de liaison unidirectionnelle correspondants sont débrayés. Chaque roulement 307, 307' est en effet en prise alternativement pendant un quart de tour de rotation de l'arbre moteur 5 par l'intermédiaire, alternativement, de chacun des dispositifs de liaison unidirectionnelle 300a, 300'a, puis 300b, 300'b.

Ainsi, et grâce aux ressorts 89a, 89b du mécanisme de commande, la modification d'inclinaison ne nécessite quasiment pas d'effort et est extrêmement simple.

Dans les deuxième et troisième modes de réalisation, le variateur comporte deux roulements inclinés centrés sur le même axe fixe 223, 323 qui est l'axe de l'arbre moteur 5. En variante non représentée, les deux roulements peuvent aussi être centrés sur deux axes fixes distincts.

Il est à noter qu'un variateur selon l'invention procure un rapport de transmission qui peut varier entre 0 et une valeur importante, typiquement de l'ordre du double du plus grand rapport de transmission procuré par une boîte de vitesse manuelle et automobile conventionnelle (cinquième vitesse de rapport 1). De plus, toute variation du rapport de transmission s'effectue en un temps très court, notamment inférieur à 1s. La variation du rapport de transmission n'affecte quasiment pas le rendement de la transmission.

Et le rendement mécanique du variateur selon l'invention est excellent. Les calculs démontrent que ce rendement est supérieur à 0,95.

Un variateur selon l'invention est avantageusement applicable pour réaliser la transmission d'un véhicule terrestre automoteur (figures 1 à 3 ou 19 et 20) ou d'un cycle (figures 21 et 22). Dans le premier cas, il peut être accouplé à un moteur thermique. Il est à noter qu'il n'est alors pas nécessaire de prévoir un embrayage compte-tenu de ce que le rapport de transmission du variateur selon l'invention peut être réglé à une valeur nulle. De plus, le variateur selon l'invention présente dans cette application de nombreux avantages prépondérants, et notamment :
- un rendement mécanique de transmission excellent,
- un encombrement très faible, et en particulier inférieur, à puissance transmise équivalente, à celui d'une boîte de vitesse,
- un prix de revient inférieur à celui d'une boîte de vitesse automatique,
- une diminution de la consommation de carburant du moteur de l'ordre de 5 à 30 % du fait que les paramètres thermodynamiques du moteur peuvent être maintenus en fonctionnement aux valeurs les plus proches de celles correspondant aux consommations les plus faibles (à grande ouverture de l'admission des gaz de combustion), les accélérations .et décélérations étant obtenues essentiellement (sauf au démarrage du véhicule) par variation du rapport de transmission,
- de faibles temps de réponse procurant des reprises vives du véhicule,
- un frein moteur de forte valeur, le moteur tournant à un régime important,
- un gain de puissance moyenne disponible pour les véhicules de compétition du fait de la suppression des changements de vitesse,
- la possibilité de s'affranchir du différentiel et de la boîte de transfert en utilisant un variateur accouplé à chaque roue du véhicule,
- une simplification de la conduite des véhicules appréciable en particulier pour l'apprentissage, en compétition, ou sur les véhicules militaires tels que les chars.

## Revendications

1. Variateur de vitesse destiné à être relié à un arbre moteur (5) rotatif et à un arbre récepteur (6) rotatif, comprenant :
- au moins deux roulements inclinés (7, 7', 207, 207', 307, 307'), chaque roulement incliné (7, 7', 207, 207', 307, 307') comportant une cage (14, 14',218, 218, 318, 318') extérieure et une cage (18, 18', 214, 214', 314, 314') intérieure définissant un axe (13, 13', 213, 213') commun qui est l'axe dudit roulement incliné,
- des moyens de contrôle de l'orientation de l'axe (13, 13', 213, 213', 313, 313') de chaque roulement incliné selon un angle d'inclinaison dont la valeur réglable par rapport à un axe fixe (23a, 23b, 223, 323), détermine le rapport de transmission du variateur,
- l'une (14, 14', 214, 214', 314, 314') des cages du roulement incliné étant une cage d'entrée recevant un mouvement rotatif moteur et étant entraînée en rotation autour de l'axe fixe (230, 23b, 223, 323) à partir de la rotation de l'arbre moteur (5),
- l'autre (18, 18, 218, 218', 318, 318') cage du roulement incliné étant une cage de sortie entraînée avec l'ensemble du roulement incliné selon des mouvements alternatifs d'oscillations d'amplitude proportionnelle à l'angle d'inclinaison de l'axe (13, 13', 213, 213', 313, 313') du roulement incliné par rapport à l'axe fixe (23a, 23b, 223, 323) correspondant, cette cage de sortie coopérant avec au moins un poussoir (8, 8', 208, 208', 308a, 308'a, 308b, 308'b) pour en commander des mouvements alternatifs,
- des moyens (9, 9', 11, 11', 201, 201', 311a, 31l'a, 311b, 311'b) de transmission aptes à transformer et à transmettre les mouvements alternatifs de chaque poussoir en un mouvement de rotation unidirectionnelle de l'arbre récepteur (6),
caractérisé :
- en ce que lesdits moyens de contrôle de l'orientation de l'axe (13, 13', 213, 213', 313, 313') de chaque roulement incliné (7, 7', 207, 207', 307, 307') sont adaptés pour que ces axes (13, 13', 213, 213', 313, 313') présentent tous normalement le même angle d'inclinaison par rapport à l'axe fixe (23a, 23b, 223, 323) correspondant mais soient déphasés les uns des autres relativement au mouvement rotatif moteur, de façon à transmettre à l'arbre récepteur (6) des mouvements déphasés les uns des autres,
- en ce que lesdits moyens (9, 9', 11, 11', 201, 201', 311a, 311'a, 311b, 311'b) de transmission sont adaptés pour que, dans chaque phase du mouvement, l'un au moins des roulements inclinés (7, 7', 207, 207', 307, 307') soit en prise et transmette un effort, et l'un au moins des roulements inclinés (7, 7', 207, 207', 307, 307') ne soit pas en prise et ne transmette pas d'effort à l'arbre récepteur (6),
- en ce que lesdits moyens de contrôle de l'orientation de l'axe (13, 13', 213, 213', 313, 313') de chaque roulement incliné (7, 7', 207, 207', 307, 307') sont adaptés pour modifier l'inclinaison de tous les roulements inclinés (7, 7', 207, 207', 307, 307') à partir d'un signal de commande de variation du rapport de transmission du variateur,
- et en ce que lesdits moyens de contrôle de l'orientation de l'axe (13, 13', 213, 213', 313, 313') de chaque roulement incliné (7, 7', 207, 207', 307, 307') sont adaptés pour effectuer le réglage de l'inclinaison des roulements inclinés (7, 7', 207, 207', 307, 307') progressivement, l'inclinaison de chaque roulement incliné (7, 7', 207, 207', 307, 307') étant modifiée dans une phase du mouvement où ce roulement incliné (7, 7', 207, 207', 307, 307') n'est pas en prise et ne transmet pas d'effort à l'arbre récepteur (6).

2. Variateur selon la revendication 1 caractérisé en ce que lesdits moyens de contrôle de l'orientation de l'axe (13, 13', 213, 213', 313, 313') des roulements inclinés (7, 7', 207, 207', 307, 307') comportent :
- des moyens mobiles de commande (90) produisant une amplitude de commande correspondant à une modification d'inclinaison, et, pour chaque roulement incliné (7, 7', 207, 207', 307, 307'), ou groupe de roulements inclinés, qui sont en prise simultanément, un organe (34a, 34b) de commande d'un mécanisme de contrôle d'inclinaison du (des) roulements(s) incliné(s) (7, 7', 207, 207', 307, 307'),
- et des moyens (89a, 89b) mécaniques de mémorisation interposés entre les moyens mobiles de commande (90) et chaque organe (34a, 34b) de commande, ces moyens (89a, 89b) mécaniques de mémorisation étant adaptés pour emmagasiner une amplitude de commande correspondant à une modification d'inclinaison et ne transmettre une rotation de commande à un organe de commande (34a, 34b) que lorsque la résistance opposée par cet organe de commande (34a, 34b) est inférieure à une valeur seuil prédéterminée.

3. Variateur selon la revendication 2, caractérisé en ce que les moyens (89a, 89b) mécaniques de mémorisation comportent, pour chaque organe de commande (34a, 34b), un ressort de torsion (89a, 89b) interposé entre deux arbres rotatifs (93a, 43a ; 93b, 43b) desdits moyens de contrôle de l'orientation de l'axe (13, 13', 213, 213', 313, 313') des roulements inclinés (7, 7', 207, 207', 307, 307').

4. Variateur selon l'une des revendications 1 à 3, caractérisé en ce que ladite cage de sortie (18, 18', 218, 218', 318, 318') de chaque roulement incliné et le poussoir (8, 8', 208, 208', 308a, 308'a, 308b, 308'b) correspondant, définissent des surfaces de contact de formes complémentaires définies pour générer des mouvements alternatifs se succédant continûment.

5. Variateur selon la revendication 4, caractérisé en ce que les formes complémentaires sont définies pour que, si l'arbre moteur (5) tourne à vitesse constante, la vitesse du poussoir (8, 8', 208, 208', 308a, 308'a, 308b, 308'b) soit au moins sensiblement constante pendant une durée correspondant à au moins un quart de tour de l'arbre moteur (5) rotatif.

6. Variateur selon l'une des revendications 4 et 5, caractérisé en ce qu'il comporte un mécanisme de réglage du jeu axial entre des portées (19, 19', 22, 22') de contact du poussoir (8, 8') entre lesquelles s'étend une portion de couronne (20, 20') portée par la cage de sortie (18, 18') du roulement incliné, et des moyens de commande communs de l'inclinaison des roulements inclinés (7, 7', 207, 207', 307, 307') et dudit mécanisme de réglage du jeu axial, de sorte que le réglage du jeu axial est effectué automatiquement en fonction de l'inclinaison des roulements inclinés (7, 7', 207, 207', 307, 307').

7. Variateur selon l'une des revendications 1 à 6, caractérisé en ce que chaque poussoir (8, 8', 208, 208', 308a, 308'a, 308b, 308'b) est relié à un organe rotatif de sortie (12, 12', 212, 212', 312a, 312'a, 312b, 312'b) par l'intermédiaire d'au moins un dispositif de liaison unidirectionnelle.

8. Variateur selon la revendication 7, caractérisé en ce que chaque poussoir (8, 8', 208, 208', 308a, 308'a, 308b, 308'b) est relié à l'organe rotatif de sortie (12, 12', 212, 212', 312a, 312'a, 312b, 312'b) par l'intermédiaire de deux dispositifs de liaison unidirectionnelle (101, 101', 102, 102') montés en sens contraires, un dispositif de liaison unidirectionnelle (102, 102') moteur réalisant un blocage unidirectionnel en sens moteur, et un autre dispositif de liaison unidirectionnelle (101, 101') rétrograde réalisant un blocage unidirectionnel en sens rétrograde.

9. Variateur selon la revendication 8, caractérisé en ce qu'il comporte des moyens de commande de chaque dispositif de liaison unidirectionnelle (101, 101' 102, 102') selon au moins trois modes de fonctionnement :
- un mode moteur avec frein moteur dans lequel le dispositif de liaison unidirectionnelle (102, 102') moteur est constamment maintenu en position active et le dispositif de liaison unidirectionnelle (101, 101') rétrograde est maintenu en position active uniquement lorsque le poussoir (8, 8') correspondant et l'organe rotatif (12, 12') de sortie correspondant se déplacent dans le sens moteur.
- un mode rétrograde dans lequel le dispositif de liaison unidirectionnelle (102, 102') moteur est constamment maintenu en position inactive et le dispositif de liaison unidirectionnelle (103, 103') rétrograde est constamment maintenu en position active,
- un mode point mort dans lequel les deux dispositifs de liaison unidirectionnelle (101, 101', 102, 102') sont maintenus en position inactive.

10. Variateur selon l'une des revendications 7 à 9, caractérisé en ce que chaque dispositif de liaison unidirectionnelle (101, 101', 102, 102') est constitué d'un ressort hélicoïdal dont une extrémité est ancrée dans l'organe rotatif (12, 12') et dont l'autre extrémité coopère avec une portée de friction mobile (103, 103', 104, 104'), et en ce qu'il comporte des moyens de contrôle en fonctionnement de chaque portée de friction mobile (103, 103', 104, 104') adaptés pour que, lorsque la portée de friction (103, 103', 104, 104') est appliquée contre l'extrémité du ressort (101, 101', 102, 102'), celui-ci réalise un blocage unidirectionnel, et pour que lorsque cette portée de friction (103, 103', 104, 104') n'est pas appliquée contre l'extrémité du ressort (101, 101', 102, 102'), l'organe rotatif (12, 12') soit libre en rotation, chaque ressort (101, 101', 102, 102') pouvant être commandé en fonctionnement en position active ou en position inactive.

11. Variateur selon les revendications 9 et 10, caractérisé en ce qu'il comporte un ressort (101, 101') de liaison unidirectionnelle en sens rétrograde, et des moyens adaptés pour engendrer, dans le mode moteur avec frein moteur, des mouvements alternatifs en translation axiale de la portée de friction (103, 103') du ressort (101, 101') de liaison unidirectionnelle en sens rétrograde qui est commuté de façon cyclique en fonctionnement à haute fréquence en position active dans le sens moteur du poussoir correspondant et en position inactive dans le sens rétrograde du poussoir correspondant.

12. Variateur selon l'une des revendications 1 à 11 caractérisé en ce qu'il comporte deux roulements inclinés (207, 207', 307', 307') déphasés de 90° l'un par rapport à l'autre et en ce que lesdits moyens (201, 201', 311a, 311'a, 311b, 311'b) de transmission sont adaptés pour transmettre à l'arbre récepteur (6) les mouvements de chaque cage de sortie (218, 218', 318, 318') alternativement pendant chaque quart de tour de l'arbre moteur (5).

13. Variateur selon l'une des revendications 1 à 11 caractérisé en ce qu'il comporte deux paires de roulements inclinés (7a, 7'a, 7b, 7'b), chaque paire étant portée par un arbre fixe (2a, 2b) distinct de l'autre paire, les deux roulements inclinés d'une même paire étant déphasée de 180°, chaque roulement incliné (7a, 7'a, 7b, 7'b) porté par un arbre fixe (2a, 2b) étant déphasé de 90° par rapport à chaque roulement incliné (7b, 7'b, 7a, 7'a) porté par l'autre arbre fixe (2b, 2a).

14. Variateur selon l'une des revendications 1 à 13, caractérisé en ce qu'il comporte au moins un poussoir (208, 208', 308a, 308'a, 308b, 308'b) rotatif et oscillant comprenant au moins une portée (219, 222) au contact d'une portée solidaire de la cage de sortie (218, 218', 318, 318') d'un roulement incliné (207, 207', 307, 307').

15. Variateur selon la revendication 14, caractérisé en ce que la cage de sortie (218, 218', 318, 318') est la cage externe du roulement incliné (207, 207', 307, 307').

## Patentansprüche

1. Regelantrieb, dazu bestimmt, mit einer rotierenden Antriebswelle (5) und einer rotierenden Abtriebswelle (6) verbunden zu sein, mit:
- mindestens zwei geneigten Wälzlagern (7, 7', 207, 207', 307, 307'), wobei jedes geneigte Wälzlager (7, 7', 207, 207', 307, 307') einen äußeren Käfig (14, 14', 218, 218', 318, 318') und einen inneren Käfig (18, 18', 214, 214', 314, 314') aufweist, die eine gemeinsame Achse (13, 13', 213, 213') festlegen, die die Achse des geneigten Wälzlagers ist,
- Mitteln zur Kontrolle der Ausrichtung der Achse (13, 13', 213, 213', 313, 313') jedes geneigten Wälzlagers gemäß einem Neigungswinkel, dessen Wert, welcher bezogen auf eine feststehende Achse (23a, 23b, 223, 323) regelbar ist, das Übersetzungsverhältnis des Getriebes bestimmt,
- wobei der eine (14, 14', 214, 214', 314, 314') der Käfige des geneigten Wälzlagers ein Eingangskäfig ist, der eine Antriebsdrehbewegung erhält und ausgehend von der Drehbewegung der Antriebswelle (5) um die feststehende Achse (23a, 23b, 223, 323) in Drehbewegung versetzt wird,
- wobei der andere Käfig (18, 18', 218, 218', 318, 318') des geneigten Wälzlagers ein Ausgangskäfig ist, der mit der Einheit des geneigten Wälzlagers entsprechend hin-und hergehender Schwingungsbewegungen einer Amplitude angetrieben wird, die zu dem Neigungswinkel der Achse (13, 13', 213, 213', 313, 313') des geneigten Wälzlagers bezogen auf die entsprechende feststehende Achse (23a, 23b, 223, 323) proportional ist, wobei dieser Ausgangskäfig mit mindestens einer Druckvorrichtung (8, 8', 208, 208', 308a, 308'a, 308b, 308'b) zusammenwirkt, um seine hin- und hergehenden Bewegungen zu steuern,
- Kraftübertragungsmittel (9, 9', 11, 11', 201, 201', 311a, 311'a, 311b, 311'b), die geeignet sind, die hin-und hergehenden Bewegungen jeder Druckvorrichtung in eine in eine Richtung wirkende Drehbewegung der Abtriebswelle (6) umzuwandeln und zu übertragen,
dadurch **gekennzeichnet,**
daß die Mittel zur Kontrolle der Ausrichtung der Achse (13, 13', 213, 213', 313, 313') jedes geneigten Wälzlagers (7, 7', 207, 207', 307, 307') angepaßt sind, damit diese Achsen (13, 13', 213, 213', 313, 313') alle normalerweise denselben Neigungswinkel bezogen auf die entsprechende feststehende Achse (23a, 23b, 223, 323) aufweisen, jedoch bezogen auf die Antriebsdrehbewegung zueinander phasenverschoben sind, so daß an die Abtriebswelle (6) zueinander phasenverschobene Bewegungen übertragen werden,
daß die Kraftübertragungsmittel (9, 9', 11, 11', 201, 201', 311a, 311'a, 311b, 311'b) geeignet sind, damit in jeder Phase der Bewegung mindestens eines der geneigten Wälzlager (7, 7', 207, 207', 307, 307') in Eingriff steht und eine Belastung überträgt, und mindestens eines der geneigten Wälzlager (7, 7', 207, 207', 307, 307') nicht in Eingriff steht und auf die Abtriebswelle (6) keine Belastung überträgt,
daß die Mittel zur Kontrolle der Ausrichtung der Achse (13, 13', 213, 213', 313, 313') jedes geneigten Wälzlagers (7, 7', 207, 207', 307, 307') geeignet sind, um die Neigung aller geneigten Wälzlager (7, 7', 207, 207', 307, 307') ausgehend von einem Steuersignal der Veränderung des Übertragungsverhältnisses des Getriebes zu modifizieren, und
daß die Mittel zur Kontrolle der Ausrichtung der Achse (13, 13', 213, 213', 313, 313') jedes geneigten Wälzlagers (7, 7', 207, 207', 307, 307') geeignet sind, um die Regelung der Neigung der geneigten Wälzlager (7, 7', 207, 207', 307, 307') schrittweise auszuführen, wobei die Neigung jedes geneigten Wälzlagers (7, 7', 207, 207', 307, 307') in einer Phase der Bewegung modifiziert wird, wo dieses geneigte Wälzlager (7, 7', 207, 207', 307, 307') nicht im Eingriff steht und keine Belastung an die Abtriebswelle (6) überträgt.

2. Regelantrieb nach Anspruch 1,
dadurch **gekennzeichnet,**
daß die Mittel zur Kontrolle der Ausrichtung der Achse (13, 13', 213, 213', 313, 313') der geneigten Wälzlager (7, 7', 207, 207', 307, 307') aufweisen:
- bewegliche Steuermittel (90), die eine einer Neigungsänderung entsprechende Steueramplitude erzeugen, und für jedes geneigte Wälzlager (7, 7', 207, 207', 307, 307') oder jede Gruppe geneigter Wälzlager, die gleichzeitig im Eingriff stehen, ein Organ (34a, 34b) zur Steuerung eines Mechanismus zur Kontrolle der Neigung des geneigten Wälzlagers bzw. der geneigten Wälzlager (7, 7', 207, 207', 307, 307'), und
- mechanische Speichermittel (89a, 89b), die zwischen den beweglichen Steuermitteln (90) und jedem Steuerorgan (34a, 34b) zwischengeschaltet sind, wobei diese mechanischen Speichermittel (89a, 89b) geeignet sind, um eine einer Neigungsänderung entsprechende Steueramplitude zu speichern und nur eine Steuerdrehbewegung an ein Steuerorgan (34a, 34b) zu übertragen, wenn der durch dieses Steuerorgan (34a, 34b) entgegenwirkende Widerstand kleiner als ein vorbestimmter Schwellenwert ist.

3. Regelantrieb nach Anspruch 2,
dadurch **gekennzeichnet,**
daß die mechanischen Speichermittel (89a, 89b) für jedes Steuerorgan (34a, 34b) eine Torsionsfeder (89a, 89b) aufweisen, die zwischen zwei rotierenden Wellen (93a, 43a; 93b, 43b) der Mittel zur Kontrolle der Ausrichtung der Achse (13, 13', 213, 213', 313, 313') der geneigten Wälzlager (7, 7', 207, 207', 307, 307') zwischengeschaltet ist.

4. Regelantrieb nach einem der Ansprüche 1 bis 3,
dadurch **gekennzeichnet,**
daß der Ausgangskäfig (18, 18', 218, 218', 318, 318') jedes geneigten Wälzlagers und die entsprechende Druckvorrichtung (8, 8', 208, 208', 308a, 308'a, 308b, 308'b) Kontaktflächen festgelegter komplementärer Formen festlegen, um kontinuierlich aufeinanderfolgende, hin- und hergehende Bewegungen zu erzeugen.

5. Regelantrieb nach Anspruch 4,
dadurch **gekennzeichnet,**
daß die komplementären Formen festgelegt sind, damit, wenn sich die Antriebswelle (5) bei konstanter Geschwindigkeit dreht, die Geschwindigkeit der Druckvorrichtung (8, 8', 208, 208', 308a, 308'a, 308b, 308'b) mindestens im wesentlichen während einer Dauer konstant ist, die mindestens einer Vierteldrehung der rotierenden Antriebswelle (5) entspricht.

6. Regelantrieb nach einem der Ansprüche 4 und 5,
dadurch **gekennzeichnet,**
daß er einen Mechanismus zur Regelung des Axialspiels zwischen den Kontaktflächen (19, 19', 22, 22') der Druckvorrichtung (8, 8'), zwischen denen sich ein Teil (20, 20') des Kranzes erstreckt, der durch den Ausgangskäfig (18, 18') des geneigten Wälzlagers getragen ist, und gemeinsame Mittel zur Steuerung der Neigung der geneigten Wälzlager (7, 7', 207, 207', 307, 307') und des Mechanismus zur Regelung des Axialspiels aufweist, so daß die Regelung des Axialspiels automatisch als Funktion von der Neigung der geneigten Wälzlager (7, 7', 207, 207', 307, 307') erfolgt.

7. Regelantrieb nach einem der Ansprüche 1 bis 6,
dadurch **gekennzeichnet,**
daß jede Druckvorrichtung (8, 8', 208, 208', 308a, 308'a, 308b, 308'b) mit einem rotierenden Ausgangsorgan (12, 12', 212, 212', 312a, 312'a, 312b, 312'b) mittels mindestens einer unidirektionalen Verbindungsvorrichtung verbunden ist.

8. Regelantrieb nach Anspruch 7,
dadurch **gekennzeichnet,**
daß jede Druckvorrichtung (8, 8', 208, 208', 308a, 308'a, 308b, 308'b) mit dem rotierenden Ausgangsorgan (12, 12', 212, 212', 312a, 312'a, 312b, 312'b) mittels zweier unidirektionaler Verbindungsvorrichtungen (101, 101', 102, 102') verbunden ist, die im entgegengesetzten Sinn angebracht sind, wobei eine unidirektionale Antriebs-Verbindungsvorrichtung (102, 102') eine unidirektionale Blockade in Antriebsrichtung ausführt und eine weitere unidirektionale rückläufige Verbindungsvorrichtung (101, 101') eine unidirektionale Blockade in Rückwärtsrichtung ausführt.

9. Regelantrieb nach Anspruch 8,
dadurch **gekennzeichnet,**
daß er Mittel zur Steuerung jeder unidirektionalen Verbindungsvorrichtung (101, 101', 102, 102') gemäß mindestens dreier Funktionsmodi aufweist:
- eines Antriebsmodus mit Motorbremse, in dem die unidirektionale Antriebs-Verbindungsvorrichtung (102, 102') konstant in aktiver Position gehalten wird und die unidirektionale in Rücklaufrichtung wirkende Verbindungsvorrichtung (101, 101') einzig dann in aktiver Position gehalten wird, wenn die entsprechende Durckvorrichtung (8, 8') und das entsprechende rotierende Ausgangsorgan (12, 12') sich in Antriebsrichtung verlagern,
- eines Rücklauf-Modus', in welchem die unidirektionale Antriebs-Verbindungsvorrichtung (102, 102') konstant in inaktiver Position gehalten wird und die unidirektionale in Rücklaufrichtung wirkende Verbindungsvorrichtung (103, 103') konstant in aktiver Position gehalten wird,
- eines Leerlaufstellungs-Modus', in welchem die beiden unidirektionalen Verbindungsvorrichtungen (101, 101', 102, 102') in inaktiver Position gehalten werden.

10. Regelantrieb, nach einem der Ansprüche 7 bis 9,
dadurch **gekennzeichnet,**
daß jede unidirektionale Verbindungsvorrichtung (101, 101', 102, 102') eine zylindrische Schraubenfeder aufweist, deren eines Ende in dem rotierenden Organ (12, 12') verankert ist und deren anderes Ende mit einer beweglichen Reibungsfläche (103, 103', 104, 104') zusammenwirkt, und daß er Mittel zur Kontrolle jeder beweglichen Reibungsfläche (103, 103', 104, 104') im Betrieb aufweist, die geeignet sind, um dann, wenn die Reibungsfläche (103, 103', 104, 104') gegen das Ende der Feder (101, 101', 102, 102') gedrückt ist, diese eine in einer Richtung wirkende Blockade ausführt, um dann, wenn diese Reibungsfläche (103, 103', 104, 104') nicht gegen das Ende der Feder (101, 101', 102, 102') gedrückt ist, das rotierende Organ (12, 12') drehbeweglich ist, wobei jede Feder (101, 101', 102, 102') im Betrieb in aktiver oder in inaktiver Position gesteuert werden kann.

11. Regelantrieb nach Anspruch 9 und 10,
dadurch **gekennzeichnet,** daß er eine in Rücklaufrichtung wirkende unidirektionale Verbindungsfeder (101, 101') und Mittel aufweist, die geeignet sind, um in dem Antriebsmodus mit Motorbremse hin-und hergehende Bewegungen in axialer Translation der Reibungsfläche (103, 103') der in Rücklaufrichtung wirkenden unidirektionalen Verbindungsfeder (101, 101') zu erzeugen, die in aktiver Position in der Antriebsrichtung entsprechenden Druckvorrichtung mit hoher Frequenz betrieben und in inaktiver Position in der Rücklaufrichtung der entsprechenden Druckvorrichtung kommutiert wird.

12. Regelantrieb nach einem der Ansprüche 1 bis 11,
dadurch **gekennzeichnet,** daß er zwei geneigte, zueinander um 90° phasenverschobene Wälzlager (207, 207', 307, 307') aufweist und daß die Kraftübertragungsmittel (201, 201', 311a, 311'a, 311b, 311'b) geeignet sind, um an die Abtriebswelle (6) die Bewegungen jedes Ausgangskäfigs (218, 218', 318, 318') abwechselnd während jeder Vierteldrehung der Antriebswelle (5) zu übertragen.

13. Regelantrieb nach einem der Ansprüche 1 bis 11,
dadurch **gekennzeichnet,** daß er zwei Paare geneigter Wälzlager (7a, 7'a, 7b, 7'b) aufweist, wobei jedes Paar durch eine feststehende Welle (2a, 2b) getragen ist, die von dem anderen Paar verschieden ist, wobei die beiden geneigten Wälzlager ein und desselben Paars um 180° phasenverschoben sind, wobei jedes geneigte Wälzlager (7a, 7'a, 7b, 7'b) durch eine feststehende Welle (2a, 2b) getragen ist, die bezogen auf jedes geneigte Wälzlager (7b, 7'b, 7a, 7'a) um 90° phasenverschoben ist, das durch die andere feststehende Welle (2b, 2a) getragen ist.

14. Regelantrieb nach einem der Ansprüche 1 bis 13,
dadurch **gekennzeichnet,** daß er mindestens eine rotierende und sich hin- und herbewegenden Druckvorrichtung (208, 208', 308a, 308'a, 308b, 308'b) aufweist, die mindestens eine Fläche (219, 222) aufweist, die sich im Kontakt mit einer Fläche befindet, die mit dem Ausgangskäfig (218, 218', 318, 318') eines geneigten Wälzlagers (207, 207', 307, 307') fest verbunden ist.

15. Variator nach Anspruch 14,
dadurch **gekennzeichnet,** daß der Ausgangskäfig (218, 218', 318, 318') der äußere Käfig des geneigten Wälzlagers (207, 207', 307, 307') ist.

## Claims

1. Variable speed drive to be connected to a rotating driving shaft (5) and to a rotating driven shaft (6), comprising:
- at least two angled bearings (7, 7', 207, 207', 307, 307'), each angled bearing (7, 7', 207, 207', 307, 307') comprising an external casing (14, 14', 218, 218, 318, 318') and an interior casing (18, 18', 214, 214', 314,314') defining a common axle (13, 13', 213,213') which is the axle of said inclined bearing,
- control means for the orientation of the axle (13, 13', 213, 213', 313, 313') of each angled bearing according to an inclination angle whose adjustable value with respect to a fixed axle (23a, 23b, 223, 323), determines the transmission ratio ofthe variable speed drive,
- one (14, 14', 214, 214', 314, 314') ofthe casings ofthe inclined bearing being an input casing receiving a driving rotating movement and being driven in rotation around the fixed axle (230, 23b, 223, 323) from the rotation ofthe driving shaft (5),
- the other (18, 18, 218, 218', 318, 318') casing ofthe angled bearing being an output casing driven with the angled bearing assembly according to alternating oscillation movements having an amplitude which is proportional to the inclination angle of the axle (13, 13', 213, 213', 313, 313') of the angled bearing with respect to the corresponding fixed axle (23a, 23b, 223, 323), this output casing cooperating with at least one tappet (8, 8', 208, 208', 308a, 308'a, 308b, 308'b) to control its alternating movements,
- transmission means (9, 9', 11, 11', 201, 201', 311a, 311'a, 311b, 311'b) adapted to transform and to transmit the alternating movements of each tappet in a unidirectional rotational movement of the driven shaft (6),
characterised
- in that said control means ofthe orientation of the axle (13, 13', 213, 213', 313, 313') of each angled bearing (7, 7', 207, 207', 307, 307') are adapted such that these axles (13, 13', 213, 213', 313, 313') normally exhibit the same inclination angle with respect to the corresponding fixed axle (23a, 23b, 223, 323) but are out of phase ones with respect to the others relative to the driving rotating movement, in such a manner as to transmit to the driven shaft (6) the movements out of phase ones with respect to the others,
- in that said transmission means (9, 9', 11, 11', 201, 201', 311a, 311'a, 311b, 311'b) are adapted such that, for each movement phase, at least one of the angled bearings (7, 7', 207, 207', 307, 307') are engaged and transmit a force, and at least one ofthe angled bearings (7, 7', 207, 207', 307, 307') is not engaged and does not transmit force to the driven shaft (6),
- in that said control means ofthe orientation ofthe axle (13, 13', 213, 213', 313, 313') of each angled bearing (7, 7', 207, 207', 307, 307') are adapted to modify the inclination of all of the angled bearings (7, 7', 207, 207', 307, 307') based on a control signal ofthe variation ofthe transmission ratio ofthe variable speed drive,
- and in that said control means ofthe orientation ofthe axle (13, 13', 213, 213', 313, 313') of each angled bearing (7, 7', 207, 207', 307, 307') are adapted to progressively carry out the adjustments ofthe inclination of the angled bearings (7, 7', 207, 207', 307, 307'), the inclination of each angled bearing (7, 7', 207, 207', 307, 307') being modified in a movement phase where this angled bearing (7, 7', 207, 207', 307, 307') is not engaged and does not transmit effort to the driven shaft (6),

2. Variable speed drive according to claim 1, characterised in that said control means of the orientation ofthe axle (13, 13', 213, 213', 313, 313') ofthe angled bearings (7, 7', 207, 207', 307, 307') comprise:
- movable control means (90) producing a control amplitude corresponding to an inclination modification, and, for each angled bearing (7, 7', 207, 207', 307, 307') or a group of angled bearings, which are simultaneously engaged, a control unit of an inclination control mechanism ofthe angled bearing(s) (7, 7', 207, 207', 307, 307'),
- and mechanical memory means (89a, 89b) interposed between the movable control means (90) and each control unit (34a, 34b), these mechanical memory means (89a, 89b) being adapted to store up a control amplitude corresponding to a modification of inclination and to transmit a rotation control to a control unit (34a, 34b) only when the resistance opposed by this control unit (34a, 34b) is less than a piedetermined threshold value.

3. Variable speed drive according to claim 2, characterised in that the mechanical memory means (89a, 89b) comprise, for each control unit (34a, 34b), a torsion spring (89a, 89b) interposed between two rotating shafts (93a, 43a; 93b, 43b) of said control means for the orientation ofthe axle (13, 13', 213, 213', 313, 313') ofthe angled bearings (7, 7', 207, 207', 307, 307').

4. Variable speed drive according to one of the claims 1 to 3, characterised in that said output casing (18, 18', 218, 218', 318, 318') of each angled bearing and the corresponding tappet (8, 8', 208, 208', 308a, 308'a, 308b, 308'b), define contact surfaces having complementary shapes defined to generate continuous successive alternating movements.

5. Variable speed drive according to claim 4, characterised in that the complementary shapes are defined such that, if the driving shaft (5) turns at a constant speed, the speed ofthe tappet (8, 8', 208, 208', 308a, 308'a, 308b, 308'b) is at least substantially constant during a duration corresponding at least to a quarter turn ofthe rotating driving shaft (5).

6. Variable speed drive according to one of the claims 4 and 5, characterised in that it comprises an axial play adjustment mechanism between the contact bearing areas (19, 19', 22, 22') of the tappet (8, 8') between which a crown portion (20, 20') extends supported by the output casing (18, 18') of the angled bearing, and common control means of the inclination of the angled bearings (7, 7', 207, 207', 307, 307') and said axial play adjustment mechanism, in such a manner that the adjustment of the axial play is carried out automatically as a function of the inclination ofthe angled bearings (7, 7', 207, 207', 307, 307').

7. Variable speed drive according to one of the claims 1 to 6, characterised in that each tappet (8, 8', 208, 208', 308a, 308'a, 308b, 308'b) is connected to an output rotating unit (12, 12', 212, 212', 312a, 312'a, 312b, 312'b) by at least one unidirectional linking device.

8. Variable speed drive according to claim 7, characterised in that each tappet (8, 8', 208, 208', 308a, 308'a, 308b, 308'b) is connected to the output rotating unit (12, 12', 212, 212', 312a, 312'a, 312b, 312'b) by two unidirectional linking devices (101, 101', 102, 102') mounted in opposite directions, a driving unidirectional linking device (102, 102') carrying out a unidirectional blocking in the driving direction, and the other retrograde unidirectional linking device (101, 101') carrying out a unidirectional blocking in the retrograde direction.

9. Variable speed drive according to claim 8, characterised in that it comprises control mechanisms of each unidirectional linking device (101, 101', 102, 102') according to at least three functioning modes:
- a driving mode with engine brake in which the driving unidirectional linking device (102, 102') is always maintained in an active position and the retrograde unidirectional linking device (101, 101') is maintained in active position only when the corresponding tappet (8, 8') and the corresponding output rotating unit (12, 12') move in the driving direction.
- a retrograde mode in which the driving unidirectional linking device (102, 102') is always maintained in an inactive position and the retrograde unidirectional linking device (103, 103') is always maintained in the active position,
- a neutral position in which the two unidirectional linking devices (101, 101', 102, 102') are maintained in the inactive position.

10. Variable speed drive according to one of the claims 7 to 9, characterised in that each unidirectional linking device (101, 101', 102, 102') is constituted by a helicoidal spring whose one extremity is anchored in the rotating unit (12, 12') and whose other extremity cooperates with a movable frictional bearing area (103, 103', 104, 104'), and in that it comprises control means for the functioning of each moveable frictional bearing area (103, 103', 104, 104') adapted such that, when the frictional bearing area (103, 103', 104, 104') is applied against the extremity of the spring (101, 101', 102, 102'), this latter carries out a unidirectional blocking, and such that when this frictional bearing area (103, 103', 104, 104') is not applied against the extremity of the spring (101, 101', 102, 102') the rotating unit (12, 12') is in free rotation, each spring (101, 101', 102, 102') being able to be controlled in its functioning and at the active or inactive position.

11. Variable speed drive according to claims 9 and 10, characterised in that it comprises a retrograde direction unidirectional linking spring (101, 101'), and means adapted to generate, in the driving mode with engine brake, alternating movements in axial translation of the frictional bearing area (103, 103') of the retrograde directional unidirectional linking spring (101, 101') which is commutated in a cyclical fashion to function at high frequency in the active position in the driving direction of the corresponding tappet and in the inactive position in the retrograde direction of the corresponding tappet.

12. Variable speed drive according to one of the claims 1 to 11, characterised in that it comprises two angled bearings (207, 207', 307, 307') out of phase by 90° one with respect to the other and in that said transmission means (201, 201', 311a, 311'a, 311b, 311'b) are adapted to transmit to the driven shaft (6) the movements of each output casing (218, 218', 318, 318') alternatively during each quarter turn of the driving shaft (5).

13. Variable speed drive according to one of the claims 1 to 11, characterised in that it comprises two pairs of angled bearings (7a, 7'a, 7b, 7'b), each pair being supported by a fixed shaft (2a, 2b) distinct from the other pair, the two angled bearings of a same pair being out of phase by 180°, each angled bearing (7a, 7'a, 7b, 7'b) supported by a fixed shaft (2, 2b) being out of phase by 90° with respect to each angled bearing (7b, 7'b, 7a, 7'a) supported by the other fixed shaft (2b, 2a).

14. Variable speed drive according to one of the claims 1 through 13, characterised in that it comprises at least one rotatable and oscillating tappet (208, 208', 308a, 308'a, 308b, 308'b) comprising at least one bearing area (219, 222) in contact with a bearing area cooperating with the output casing (218, 218', 318, 318') of an angled bearing (207, 207', 307, 307').

15. Variable speed drive according to claim 14, characterised in that the output casing (218, 218' 318, 318') is the external casing ofthe angled bearing (207, 207', 307, 307').
